# EUROPEAN PATENT SPECIFICATION

(11) **EP 4 067 184 B1**
(45) Date of publication and mention of the grant of the patent: **31.07.2024**
(21) Application number: 21908117.1
(22) Date of filing: 02.02.2021
(51) Int. Cl.: B60W 10/06, B60W 10/02, B60W 10/08, B60W 30/20, B60W 20/15, B60W 30/18

(54) **METHOD AND APPARATUS FOR STARTING ENGINE IN DUAL-MOTOR HYBRID POWER SYSTEM, AND VEHICLE**
VERFAHREN UND VORRICHTUNG ZUM STARTEN EINER BRENNKRAFTMASCHINE IN EINEM ZWEIMOTORHYBRIDANTRIEBSSYSTEM UND FAHRZEUG
PROCÉDÉ ET APPAREIL DE DÉMARRAGE D'UN MOTEUR DANS UN SYSTÈME D'ALIMENTATION HYBRIDE À DOUBLE MOTEUR, ET VÉHICULE

(30) Priority: 07.01.2021 CN 202110018057; 07.01.2021 CN 202110018887; 07.01.2021 CN 202110018874
(43) Date of publication of application: 05.10.2022
(73) Proprietor: Zhejiang Geely Holding Group Co., Ltd., Hangzhou, Zhejiang 310051 (CN); Ningbo Geely Royal Engine Components Co., Ltd., Ningbo City, Zhejiang 315336 (CN); Aurobay Technology Co., Ltd., Ningbo, Zhejiang 315899 (CN)
(72) Inventor: JING, Junchao, Hangzhou Zhejiang 310051 (CN); LIU, Yiqiang, Hangzhou Zhejiang 310051 (CN); HUANG, Weishan, Hangzhou Zhejiang 310051 (CN); ZUO, Botao, Hangzhou Zhejiang 310051 (CN); YANG, Jun, Hangzhou Zhejiang 310051 (CN); YU, Xuemei, Hangzhou Zhejiang 310051 (CN); WANG, Ruiping, Hangzhou Zhejiang 310051 (CN); SCHOLTEN, Ingo, Hangzhou Zhejiang 310051 (CN)
(74) Representative: Osterhoff, Utz
(86) International application number: PCT/CN2021/074766
(87) International publication number: WO 2022/147870

(56) References cited:
- CN-A- 104 709 274
- CN-A- 108 515 965
- CN-A- 108 528 429
- CN-A- 110 539 744
- GB-A- 2 487 733
- US-A1- 2010 116 235
- US-A1- 2011 118 915
- US-A1- 2016 121 880
- US-A1- 2016 375 889

## Description

### FIELD OF THE INVENTION

The present invention relates to the technical field of vehicles, and in particular, to a start method and apparatus for an engine in a dual-motor hybrid power system, and a hybrid electric vehicle.

### BACKGROUND OF THE INVENTION

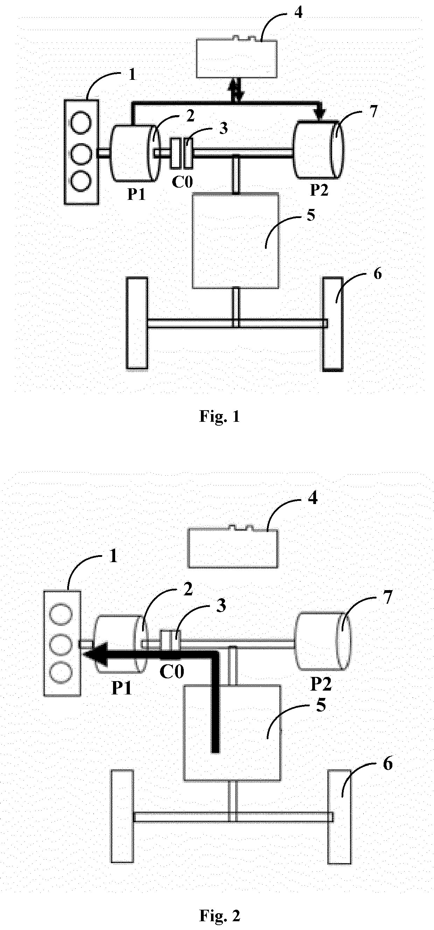

With the increasingly stringent requirements for vehicle fuel consumption and emission in various countries and the development of the electrification system, the hybrid power technology has become the key to achieve energy saving and emission reduction of the vehicles. Due to the complex battery technology and high cost of the current pure electric systems, a hybrid power system is widely promoted. A dual-motor hybrid power system is a high-efficiency hybrid power system, and its general structure is as shown in FIG. 1. The dual-motor hybrid power system generally has three engine start modes: a 12V starter dragging the engine to start (called 12V start), a P1 motor dragging the engine to start (called P1 motor start) and a clutch C0 dragging the engine to start (called clutch start). In normal cases, the dual-motor hybrid power systems are all started by the P1 motor; and in the case that the P1 motor is in failure, 12V start or clutch start are selected according to the condition of the vehicle speed.

Document US 2011/0118915 A1 discloses a vehicle and method for controlling engine start in a vehicle. The vehicle includes a motor/generator, a starter motor, a disconnect clutch disposed between the engine and the motor/generator. When an engine start is requested, various parameters are controlled to ensure a smooth engine start wherein drive line torque disturbances are minimized. The starter motor is used to crank the engine upon an engine start request, thereby eliminating the need to transfer torque from the motor/generator to the engine.

However, in the prior art, in the P1 motor start or clutch start process, the drag torque of the P1 motor or the drag torque of the clutch C0 are directly increased to the maximum, causing the drag torque to rise too fast, resulting in an impact, and leading to unsmooth engine start. Meanwhile, in the P1 motor start or clutch start process, generally the engine starts to inject fuel when the drag torque of the P1 motor or of the clutch has not been unloaded yet, resulting in start impact; moreover, when a cold engine starts, the engine fails to start or the rotating speed of the engine drops due to the long fuel injection delay time, which seriously affects the start smoothness and safety of the engine. In addition, when the vehicle speed is less than or equal to a preset vehicle speed threshold (such as 10 km/h), 12V start will be adopted; however, during 12V start, the noise and oscillation are large, the Noise-Vibration-Harshness (NVH) property and the stability of the vehicle are low, and the user experience is poor.

### BRIEF DESCRIPTION OF THE INVENTION

In view of the above problem, the present invention provides a start method and apparatus for an engine in a dual-motor hybrid power system and a hybrid electric vehicle, so as to overcome the above problem or at least partially solve the above problem.

An object of the present invention is to provide a start method for an engine in a dual-motor hybrid power system, which improves the start smoothness of the engine by adopting at least one of a pre-dragging torque strategy, a fuel injection control strategy and a clutch start waiting strategy.

A further object of the present invention is to prevent motor jitter in the process of clutch start, thereby further improving the start smoothness.The present invention provides a start method for an engine in a dual-motor hybrid power system, the dual-motor hybrid power system including the engine, a first motor connected to the engine, and a clutch connected between the first motor and a gear shift system; the start method including: when receiving an engine start request, acquiring a current state of the first motor and current state data of a vehicle;
characterized in that the start method further includes: determining an available start strategy according to the current state of the first motor and the current state data of the vehicle, and executing the available start strategy to start the engine, wherein the available start strategy includes at least one of the following: a pre-dragging torque strategy, and a clutch start waiting strategy in which it is waiting for a vehicle speed of the vehicle to be increased to be greater than a preset vehicle speed threshold and the clutch is controlled to drag the engine to start when the vehicle speed of the vehicle has been increased to be greater than the preset vehicle speed;
wherein the current state data of the vehicle at least includes a current vehicle speed of the vehicle; and
the step of determining an available start strategy according to the current state of the first motor and the current state data of the vehicle, and executing the available start strategy to start the engine includes:
   determining whether a target component that is going to drag the engine to start is the first motor or the clutch according to the current state of the first motor and the current vehicle speed of the vehicle;
   in response to that the target component that is going to drag the engine to start is the first motor or the clutch, determining whether a pre-dragging torque applying condition is met according to the current state data of the vehicle;
   in response to that the pre-dragging torque applying condition is met, determining that the pre-dragging torque strategy is the available start strategy; and
   executing the pre-dragging torque strategy, including: generating a drag start signal and sending the signal to the target component, and controlling the target component to output a corresponding pre-dragging torque within a set duration since receiving the drag start signal; and
   after the target component has completed the output of the pre-dragging torque, increasing the drag torque output by the target component to a maximum drag torque that is required to drag the engine to a target rotating speed, so as to drag the engine to reach the target rotating speed, the pre-dragging torque being smaller than the maximum drag torque.

In an embodiment, the current state data of the vehicle further includes a rotating speed of the engine and an accelerator state or a driver request torque; and
the pre-dragging torque applying condition includes that the rotating speed of the engine is less than or equal to a preset rotating speed threshold and a start mode intended by the driver is a stable start mode, wherein
the accelerator state includes an accelerator opening degree and an accelerator change rate; and
the step of determining whether the pre-dragging torque applying condition is met according to the current state data of the vehicle includes:
   determining whether the acquired rotating speed of the engine is less than or equal to the preset rotating speed threshold; and
   determining whether the start mode intended by the driver is the stable start mode according to the acquired accelerator opening degree and accelerator change rate or according to the acquired driver request torque.

In an embodiment, the step of determining whether the start mode intended by the driver is the stable start mode according to the acquired accelerator opening degree and accelerator change rate, or according to the acquired driver request torque includes:
determining whether the accelerator opening degree is greater than a first accelerator opening degree threshold and the accelerator change rate is greater than a preset change rate threshold; if not, determining that the start mode intended by the driver is the stable start mode; or
determining whether the driver request torque is less than or equal to a first wheel end torque threshold; if so, determining that the start mode intended by the driver is the stable start mode.

In an embodiment, the current state data of the vehicle further includes a cooling liquid temperature of the engine; and
the step of determining an available start strategy according to the current state of the first motor and the current state data of the vehicle, and executing the available start strategy to start the engine further includes:
when it is determined that the target component is the first motor or the clutch, determining that a fuel injection control strategy is the available start strategy; and
executing the fuel injection control strategy, including: determining a start mode intended by a driver according to the current state data of the vehicle;
determining a fuel injection time of the engine corresponding to the target component according to the cooling liquid temperature of the engine and the start mode intended by the driver; and
controlling the engine to inject fuel at the determined fuel injection time in the process where the target component drags the engine to start.
In an embodiment, the current state data of the vehicle further includes an accelerator state or a driver request torque; and
the start mode intended by the driver includes a rapid start mode and a stable start mode, wherein
the accelerator state includes an accelerator opening degree and an accelerator change rate; and
the step of determining the start mode intended by the driver according to the current state data of the vehicle includes:
   determining whether the accelerator opening degree is greater than a first accelerator opening degree threshold and the accelerator change rate is greater than a preset change rate threshold;
   in response to that the accelerator opening degree is greater than the first accelerator opening degree threshold and the accelerator change rate is greater than the preset change rate threshold, determining that the start mode intended by the driver is the rapid start mode;
   in response to that the accelerator opening degree is not greater than the first accelerator opening degree threshold and or accelerator change rate is not greater than the preset change rate threshold, determining that the start mode intended by the driver is the stable start mode; or
   determining whether the driver request torque is greater than a first wheel end torque threshold;
   in response to that the driver request torque is greater than the first wheel end torque threshold, determining that the start mode intended by the driver is the rapid start mode;
   in response to that the driver request torque is not greater than the first wheel end torque threshold, determining that the start mode intended by the driver is the stable start mode.

In an embodiment, the step of determining the fuel injection time of the engine corresponding to the target component according to the cooling liquid temperature of the engine and the start mode intended by the driver includes:
when the start mode intended by the driver is the rapid start mode, determining that the fuel injection time of the engine is the time when the rotating speed of the engine is greater than 0;
when the start mode intended by the driver is the stable start mode and the cooling liquid temperature of the engine is greater than a preset hot engine start temperature, determining that the fuel injection time of the engine is the time when a drag torque of the target component is completely unloaded; and
when the start mode intended by the driver is the stable start mode and the cooling liquid temperature of the engine is less than or equal to the preset hot engine start temperature, searching a correspondence relationship table between a cooling liquid temperature of the engine and a torque limit value of the target component to obtain a target torque limit value of the target component corresponding to the cooling liquid temperature of the engine, and determining that the fuel injection time of the engine is the time when the drag torque of the target component is less than the target torque limit value.

In an embodiment, the step of controlling the engine to inject fuel at the determined fuel injection time in the process where the target component drags the engine to start includes:
when the start mode intended by the driver is the rapid start mode, acquiring a current rotating speed of the engine in real time in the process where the target component drags the engine to start;
when the current rotating speed of the engine is greater than 0, controlling the engine to inject fuel;
when the start mode intended by the driver is the stable start mode, acquiring the drag torque of the target component in real time in the process where the target component drags the engine to start;
in a case that the cooling liquid temperature of the engine is greater than the preset hot engine start temperature, when the drag torque of the target component is completely unloaded, controlling the engine to inject fuel; and
in a case that the cooling liquid temperature of the engine is less than or equal to the preset hot engine start temperature, when the drag torque of the target component is less than the target torque limit value, controlling the engine to inject fuel.

In an embodiment, the step of determining whether the target component is the first motor or the clutch according to the current state of the first motor and the current vehicle speed of the vehicle includes:
in response to that the current state of the first motor is normal, determining that the target component is the first motor; and
in response to that the current state of the first motor is faulty and the current vehicle speed of the vehicle is greater than a preset vehicle speed threshold, determining that the target component is the clutch.

In an embodiment, the step of determining an available start strategy according to the current state of the first motor and the current state data of the vehicle, and executing the available start strategy to start the engine further includes:
in response to that the current state of the first motor is faulty, determining whether the current vehicle speed of the vehicle is less than or equal to a preset vehicle speed threshold and whether other current state data of the vehicle meets a clutch start waiting condition;
in response to that the current vehicle speed of the vehicle is less than or equal to the preset vehicle speed threshold and the other current state data of the vehicle meets the clutch start waiting condition, determining that the clutch start waiting strategy is the available start strategy; and
executing the clutch start waiting strategy, including: monitoring the vehicle speed of the vehicle in real time until the vehicle speed of the vehicle is greater than the preset vehicle speed threshold, and controlling the clutch to drag the engine to start.
In an embodiment, the clutch start waiting condition includes a condition that the vehicle is accelerated, and a condition that the vehicle does not require the engine to operate all the time, wherein
the current state data of the vehicle further includes an acceleration or an accelerator opening degree and a driving mode of the vehicle;
the condition that the vehicle is accelerated includes:
   the acceleration is a positive value and is greater than a preset acceleration threshold, or
   the accelerator opening degree is greater than a second accelerator opening degree threshold; and
   the condition that the vehicle does not require the engine to operate all the time includes:
      the driving mode of the vehicle is not a sport mode.

In an embodiment, the current state data of the vehicle further includes a driver request torque; and
the clutch start waiting condition further includes:
the driver request torque is less than a second wheel end torque threshold.

In an embodiment, the dual-motor hybrid power system further includes a second motor connected to the gear shift system and used to drive wheels; and
in response to that the engine is dragged by the clutch in the start process of the engine, the start method further includes:
in the process where the clutch drags the engine to start, performing active damping control on the second motor, wherein
the step of performing active damping control on the second motor includes:
   acquiring a requested rotating speed of a driver and an actual rotating speed of the second motor;
   calculating a difference value between the requested rotating speed and the actual rotating speed; and
   performing proportional-integral control on the second motor according to the difference value, so as to compensate an output torque of the second motor.

The present application also provides a start apparatus for an engine in a dual-motor hybrid power system, characterized by including a memory and a processor, wherein a control program is stored in the memory; and the control program is used to implement the start method when being executed by the processor.

The present application also provides a hybrid electric vehicle, characterized by including a dual-motor hybrid power system, and the start apparatus for the engine in the dual-motor hybrid power system.

The above description is only an overview of the technical solution of the present invention. To understand more clearly the technical means of the present invention, to implement in accordance with the contents of the specification, and to make the above and other purposes, features and advantages of the present invention more apparent and understandable, specific embodiments of the present invention are described below.

According to detailed description of specific embodiments of the present invention with the combination of drawings, the above and other objects, advantages and features of the present invention will be better understood by those skilled in the art.

### BRIEF DESCRIPTION OF THE DRAWINGS

Some specific embodiments of the present invention will be described later in detail in an exemplary and non-limiting manner with reference to the drawings. Identical reference numerals in the drawings indicate identical or similar components or parts. It should be understood by those skilled in the art that these drawings are not necessarily drawn to scale. In drawings:
FIG. 1 is a structural schematic diagram of a dual-motor hybrid power system;
FIG. 2 is a schematic diagram of the dual-motor hybrid power system shown in FIG. 1 when in clutch start;
FIG. 3 is a schematic flowchart of a start method for an engine in the dual-motor hybrid power system according to an embodiment I of the present invention;
FIG. 4 is a schematic flowchart of a start method for an engine in the dual-motor hybrid power system according to an embodiment II of the present invention;
FIG. 5 is a schematic diagram of the start effect after a pre-dragging torque is adopted during the P1 motor start in the start method for the engine in the dual-motor hybrid power system according to the embodiment II of the present invention;
FIG. 6 is a schematic diagram of the start effect in a case that a pre-dragging torque is not adopted during the P1 motor start in the prior art;
FIG. 7 is a schematic flowchart of a start method for an engine in the dual-motor hybrid power system according to an embodiment III of the present invention;
FIG. 8 is a schematic flowchart of a start method for an engine in the dual-motor hybrid power system according to an embodiment IV of the present invention;
FIG. 9 is a schematic flowchart of a start method for an engine in the dual-motor hybrid power system according to an embodiment V of the present invention;
FIG. 10 is a schematic diagram of each stage in the process of the P1 motor start according to the embodiment V of the present invention;
FIG. 11 is a schematic flowchart of a start method for an engine in the dual-motor hybrid power system according to an embodiment VI of the present invention;
FIG. 12 is a schematic flowchart of a start method for an engine in the dual-motor hybrid power system according to an embodiment VII of the present invention; and
FIG. 13 is a structural schematic diagram of a start apparatus for an engine in a dual-motor hybrid power system according to an embodiment of the present invention.

### DETAILED DESCRIPTION

The dual-motor hybrid power system is a key technology to realize energy saving and emission reduction of the vehicles at present. As shown in FIG. 1, the dual-motor hybrid power system may generally include an engine 1, a first motor 2 (shown as P1 in FIG. 1) connected to the engine 1, and a clutch 3 (shown as C0 in FIG. 1) connected between the first motor 2 and a gear shift system 5. The gear shift system 5 is connected to wheels 6. The dual-motor hybrid power system may further include a battery 4 connected to the first motor 2. Further, the dual-motor hybrid power system may further include a second motor 7 (shown as P2 in FIG. 1), wherein the second motor 7 is connected to the gear shift system 5, and is connected to the battery 4 and the clutch 3 at the same time.

The dual-motor hybrid power system generally has three modes: a pure electric mode, a series mode and a parallel mode. In the series mode, the clutch C0 is not engaged, the engine 1 charges the battery 4 through the first motor 2 (that is, a P1 motor), and the battery 4 supplies power for the second motor 7 (that is, a P2 motor) so as to enable the P2 motor to drive the wheels 6. In the parallel mode, the clutch C0 is engaged, and the engine 1 and the P2 motor directly drive the wheels 6 at the same time.

As described above, the dual-motor hybrid power system generally has three engine start modes: a 12V starter dragging the engine 1 to start (called 12V start, the 12V starter is not shown in FIG. 1), a P1 motor dragging the engine 1 to start (called P1 motor start) and a clutch C0 dragging the engine 1 to start (called clutch start). In normal cases, the dual-motor hybrid power systems all adopts the P1 motor start, while in the case of P1 motor failure, the 12V start or the clutch start is selected according to the condition of the current vehicle speed. When in the clutch start, as shown in FIG. 2, the clutch C0 is engaged, the clutch C0 drags the engine 1 to start, and the black arrow in FIG. 2 represents a transmission direction of the drag torque.

However, in the prior art, the start smoothness, safety and NVH property of the engine are poor, which urgently need to be improved.

To solve or at least partially solve the above technical problem, the embodiments of the present invention provide a start method for an engine in a dual-motor hybrid power system. The technical solutions of the embodiments of the present invention are described below clearly and completely through the embodiment I to the embodiment VIII of the present invention.

### Embodiment I

The structure of the dual-motor hybrid power system in this embodiment is as shown in FIG. 1. The dual-motor hybrid power system includes the engine 1, the first motor 2 (that is, the P1 motor) connected to the engine 1, and the clutch 3 (that is, the clutch C0) connected between the first motor 2 and the gear shift system 5.

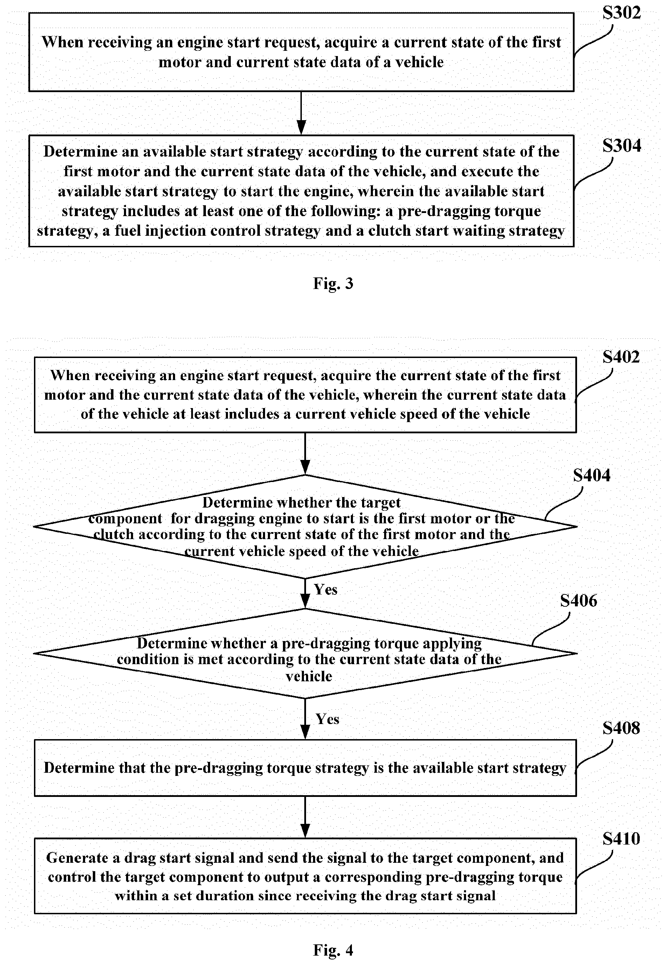

Referring to FIG. 3, the start method for the engine in the dual-motor hybrid power system provided by this embodiment at least may include the following step S302 to step S304.

Step S302: when an engine start request is received, a current state of the first motor 2 and current state data of a vehicle are acquired.

Step S304: an available start strategy is determined according to the current state of the first motor 2 and the current state data of the vehicle, and the available start strategy is executed to start the engine, wherein the available start strategy includes at least one of the following: a pre-dragging torque strategy, a fuel injection control strategy and a clutch start waiting strategy.

Specifically, the pre-dragging torque strategy controls a target component (specifically may be the first motor or the clutch), which drags the engine to start, to output a pre-dragging torque before an output drag torque thereof is increased to a maximum value to drag the engine to a target rotating speed. The fuel injection control strategy controls a fuel injection time of the engine according to a cooling liquid temperature of the engine and a start mode intended by a driver. The clutch start waiting strategy controls the clutch to drag the engine to start when the vehicle speed is increased to be greater than a preset vehicle speed threshold under a specific condition, so as to avoid start with the 12V starter.

In the start method for the engine in the dual-motor hybrid power system provided by the embodiments of the present invention, at least one of the pre-dragging torque strategy, the fuel injection control strategy and the clutch start waiting strategy is selected according to the current state of the first motor 2 and the current state data of the vehicle to start the engine, and at least the start smoothness of the engine is improved through these strategies.

In addition, as shown in FIG. 1, the dual-motor hybrid power system provided by this embodiment may further include the second motor 7 (that is, the P2 motor) connected to gear shift system 5 and used to drive wheels 6. The second motor 7 drives the wheels 6, so the second motor 7 may also be called a driving motor. In the process of the clutch start, the second motor 7 needs to compensate the loss of clutch start in addition to driving the wheels 6, so the second motor 7 may jitter, affecting the start smoothness. In order to prevent the second motor 7 from jittering in the process of the clutch start, in the start method for the engine in the dual-motor hybrid power system provided by this embodiment, if the clutch 3 drags the engine 1 to start (that is, the clutch start mode) in the start process of the engine, the start method may further include the following step: performing active damping control on the second motor 7 in the process where the clutch 3 drags the engine 1 to start.

Specifically, the step of performing active damping control on the second motor 7 may include:
acquiring a requested rotating speed of the driver and an actual rotating speed of the second motor 7;
calculating a difference value between the requested rotating speed and the actual rotating speed; and
performing proportional-integral (PI) control on the second motor 7 according to the difference value, so as to compensate an output torque of the second motor 7.

The proportional-integral control is a common control strategy, which will not be described in detail in this specification.

According to this embodiment, in the process of the clutch start, the second motor 7 is subjected to active damping control, so that jittering of the second motor 7 in the process of the clutch start can be avoided, and the start smoothness is further improved.

### Embodiment II

This embodiment adopts the pre-dragging torque strategy, and is different from the embodiment I in that the step S304 is specifically implemented as the step S404 to the step S410.

Specifically, referring to FIG. 4, the start method for the engine in the dual-motor hybrid power system provided by this embodiment at least may include the following step S402 to step S410.

Step S402: when an engine start request is received, the current state of the first motor 2 and the current state data of the vehicle are acquired, wherein the current state data of the vehicle at least includes a current vehicle speed of the vehicle.

Step S404: it is determined whether the target component for dragging the engine 1 to start is the first motor 2 or the clutch 3 according to the current state of the first motor 2 and the current vehicle speed of the vehicle. If so, step S406 is performed.

Step S406: it is determined whether a pre-dragging torque applying condition is met according to the current state data of the vehicle. If so, step S408 is performed.

Step S408: it is determined that the pre-dragging torque strategy is the available start strategy. Then, the pre-dragging torque strategy is executed, specifically as step S410.

Step S410: a drag start signal is generated and sent to the target component, and the target component is controlled to output a corresponding pre-dragging torque within a set duration since the drag start signal is received.

In the start method for the engine in the dual-motor hybrid power system provided by this embodiment of the present invention, in a case that the pre-dragging torque applying condition is met, the target component (the P1 motor or clutch C0) is controlled to output the corresponding pre-dragging torque within the set duration since receiving the drag start signal, so that the target component drags the engine 1 to a certain rotating speed by the pre-dragging torque before the drag torque of the target component is increased to the maximum value to drag the engine 1 to achieve the target rotating speed. In this way, the drag torque of the target component will not be increased to the maximum value directly, but an intermediate value (that is, the value of the pre-dragging torque) is reached first before the maximum value is reached, so that impact caused by the overquick rising of the drag torque is avoided, and thus the start smoothness of the engine is effectively improved.

The above step S404 specifically may be implemented as follows: if the current state of the first motor 2 is normal, it may be determined that the target component is the first motor 2 (that is, the P1 motor); and if the current state of the first motor 2 is faulty and the current vehicle speed of the vehicle is greater than a preset vehicle speed threshold, it may be determined that the target component is the clutch 3 (that is, the clutch C0). The preset vehicle speed threshold is a maximum vehicle speed allowed by 12V start attempt under the general conditions, and may serve as a distinguishing standard for selecting 12V start or clutch start in the case that the P1 motor is in failure. The preset vehicle speed threshold may be set according to the actual application configuration parameters of the vehicle, for example, it may be set to 10 km/h.

In the above step S402, the current state data of the vehicle may further include a rotating speed of the engine 1, and an accelerator state or a driver request torque. Correspondingly, the pre-dragging torque applying condition mentioned in step S406 may include that the rotating speed of the engine 1 is less than or equal to a preset rotating speed threshold and the start mode intended by the driver is a stable start mode, wherein the start mode intended by the driver may be determined according to the accelerator state or the driver request torque. The preset rotating speed threshold may be set according to a result of real vehicle calibration under the actual parameters of the engine 1. When the rotating speed of the engine 1 is greater than the preset rotating speed threshold, the pre-dragging torque cannot drag the engine 1. Specifically, the preset rotating speed threshold, for example, may be set to 50 rpm.

In a specific implementation solution, the accelerator state may include an accelerator opening degree and an accelerator change rate. In this case, step S406 may be specifically implemented as follows: it is determined whether the acquired rotating speed of the engine 1 is less than or equal to the preset rotating speed threshold; and it is determined whether the start mode intended by the driver is the stable start mode according to the acquired accelerator opening degree and accelerator change rate, or according to the acquired driver request torque. If the rotating speed of the engine 1 is less than or equal to the preset rotating speed threshold and the start mode intended by the driver is the stable start mode, step S408 is performed.

Further, the step of determining whether the start mode intended by the driver is the stable start mode according to the acquired accelerator opening degree and accelerator change rate, or according to the acquired driver request torque includes that:
it is determined whether the accelerator opening degree is greater than a first accelerator opening degree threshold and the accelerator change rate is greater than a preset change rate threshold; if not (that is, the accelerator opening degree is less than or equal to the first accelerator opening degree threshold, or the accelerator change rate is less than or equal to the preset change rate threshold), it is determined that the start mode intended by the driver is the stable start mode; or
it is determined whether the driver request torque is less than or equal to a first wheel end torque threshold; if so, it is determined that the start mode intended by the driver is the stable start mode.

In this embodiment, the first accelerator opening degree threshold and the preset change rate threshold may be respectively set to 70% and 300%/s. The first wheel end torque threshold is related to the current vehicle speed of the vehicle, and may be determined by the current vehicle speed of the vehicle. Specifically, according to the current vehicle speed of the vehicle, a vehicle end torque limit value corresponding to the current vehicle speed of the vehicle may be obtained by searching a relationship table of the vehicle speed and the wheel end torque limit value to serve as the first wheel end torque threshold. The following table 1 exemplarily shows the relationship table of the vehicle speed and the wheel end torque limit value.

**Table 1 The relationship table of the vehicle speed and the wheel end torque limit value**

| Vehicle speed (km/h) | 3 | 10 | 20 | 30 | 50 | 100 |
|---|---|---|---|---|---|---|
| Wheel end torque limit value (N·m) | 1500 | 600 | 235 | 200 | 150 | 100 |

When the table is searched, for the current vehicle speed of the vehicle that falls between the vehicle speed points in the relationship table of the vehicle speed and the wheel end torque limit value, the wheel end torque limit value corresponding to the current vehicle speed may be calculated through an interpolation method.

In this embodiment, by accurately determining whether the pre-dragging torque applying condition is met according to the rotating speed of the engine 1 and the accelerator state or the driver request torque, the effectiveness of the pre-dragging torque in improving the smoothness in the start process of the engine 1 may be ensured.

In the above step S410, the set duration may be within 0.2-0.4 s. The pre-dragging torques corresponding to different target components may be set according to the actual vehicle calibration result when the vehicle is started. When the target component is the P1 motor, impact will be generated if the value of the pre-dragging torque is set too large, and the buffer effect will not be achieved if the pre-dragging torque is set too small. Therefore, the pre-dragging torque corresponding to the P1 motor may be preferably set to 15-30 N·m. When the target component is the clutch C0, the corresponding pre-dragging torque may be set to ensure that the clutch C0 may complete attachment, so the pre-dragging torque may be set to 2-4 N·m.

In addition, it should be noted that in this embodiment, other current state data (such as the rotating speed of the engine 1, the accelerator state and the like) besides the current vehicle speed of the vehicle may also be acquired after it is determined in step S404 that the target component is the first motor 2 or the clutch 3, which will not affect the solution of the present invention.

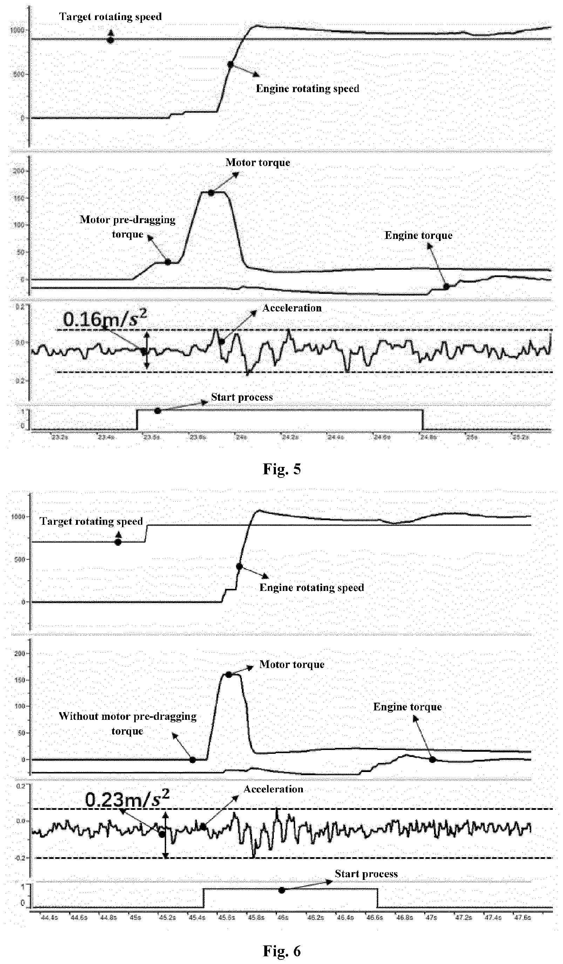

After the pre-dragging torque is applied, the drag torque of the target component is increased to the maximum value to drag the engine 1 to achieve the target rotating speed, so as to achieve the start of the engine 1, thus preventing the drag torque of the target component from directly increasing to the maximum value, and improving the smoothness. The following description takes the P1 motor start as an example. FIG. 5 shows the start effect in the start method of this embodiment after the pre-dragging torque is adopted in the P1 motor start; and FIG. 6 shows the start effect in a case that a pre-dragging torque is not adopted in the P1 motor start in the prior art. Referring to FIG. 5, the P1 motor outputs the pre-dragging torque from the moment (set to 0s moment) when the P1 motor receives the drag start signal, the pre-dragging torque reaches 20 N·m at 0.1s, and keeps at 20 N·m from 0.1s to 0.2 s, so that the engine 1 is dragged to reach a certain rotating speed. After 0.2s, the pre-dragging torque is gradually unloaded, and the pre-dragging torque is reduced to 0 at 0.4 s. Meanwhile, after 0.2 s, the drag torque output by the P1 motor is increased to the maximum value to drag the engine 1 to reach the target rotating speed; and after the engine 1 reaches the target rotating speed, the drag torque of the P1 motor is unloaded. By contrast, in FIG. 6, the P1 motor has no pre-dragging torque after receiving the drag start signal, and the drag torque thereof is directly increased to the maximum value. Through comparison between FIG. 5 and FIG. 6, the fluctuation range of the acceleration of the vehicle in the start process in FIG. 5 is 0.16 m/s², and the fluctuation range of the acceleration of the vehicle in the start process in FIG. 6 reaches 0.23 m/s² and is 0.07 m/s² larger than the fluctuation range of the acceleration in FIG. 5. It can be seen that by the start method of this embodiment, the impact during start of the engine 1 can be significantly reduced, and the start smoothness can be improved.

### Embodiment III

This embodiment adopts a fuel injection control strategy, and is different from the embodiment I in that the S304 is specifically implemented as step S704 to step S712.

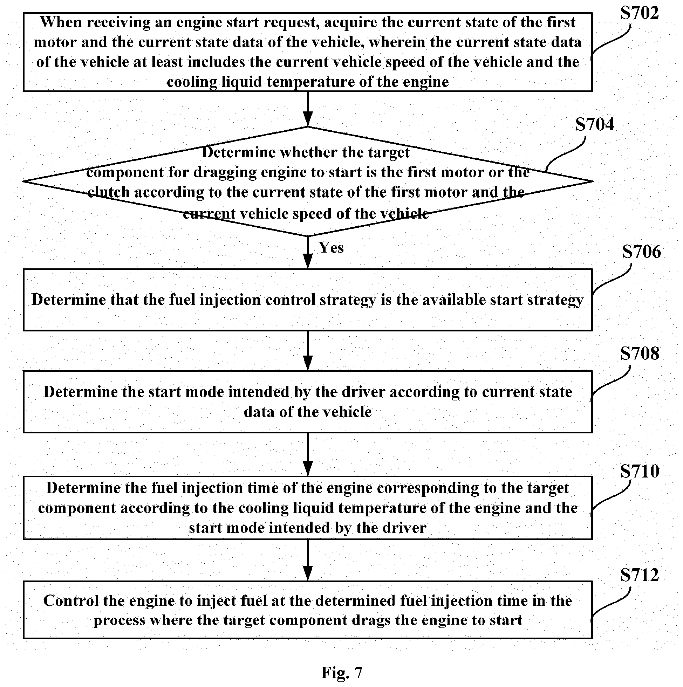

Specifically, referring to FIG. 7, the start method for the engine in the dual-motor hybrid power system provided by this embodiment at least may include the following step S702 to step S712.

Step S702: when an engine start request is received, the current state of the first motor 2 and the current state data of the vehicle are acquired, wherein the current state data of the vehicle at least includes the current vehicle speed of the vehicle and the cooling liquid temperature of the engine 1 (generally a cooling water temperature of the engine 1).

Step S704: it is determined whether the target component for dragging the engine 1 to start is the first motor 2 or the clutch 3 according to the current state of the first motor 2 and the current vehicle speed of the vehicle. If so, step S706 is performed.

Step S706: it is determined that the fuel injection control strategy is the available start strategy. Then, the fuel injection control strategy is executed, specifically as step S708 to step S712.

Step S708: the start mode intended by the driver is determined according to the current state data of the vehicle.

Step S710: the fuel injection time of the engine 1 corresponding to the target component is determined according to the cooling liquid temperature of the engine 1 and the start mode intended by the driver.

Step S712: the engine 1 is controlled to inject fuel at the determined fuel injection time in the process where the target component drags the engine 1 to start.

In the start method for the engine in the dual-motor hybrid power system provided by the embodiment of the present invention, the start mode intended by the driver may be determined according to the current state data of the vehicle, and then the fuel injection time of the engine 1 corresponding to the target component (the first motor 2, namely the P1 motor, or the clutch 3, namely, the clutch C0) is determined according to the cooling liquid temperature of the engine 1 and the start mode intended by the driver, so that the time when the engine 1 starts to inject fuel can be controlled pertinently in the process of the P1 motor start or the clutch start, the phenomena of start impact, start failure or rotating speed dropping of the engine 1 caused by advanced or delayed oil injection of the engine 1 are avoided, and the start smoothness and safety of the engine 1 are improved.

The performing mode of step S704 is the same as step S404, which will not be elaborated again.

In the above step S702, the current state data of the vehicle may further include an accelerator state or a driver request torque. Further, the accelerator state may include an accelerator opening degree and an accelerator change rate.

Correspondingly, in step S708, the start mode intended by the driver may include a rapid start mode and a stable start mode. Specifically, the step that the start mode intended by the driver is determined according to the current state data of the vehicle may be implemented as follows: it is determined whether the accelerator opening degree is greater than a first accelerator opening degree threshold and the accelerator change rate is greater than a preset change rate threshold; if so, it is determined that the start mode intended by the driver is the rapid start mode; if not (that is, the accelerator opening degree is less than or equal to the first accelerator opening degree threshold, or the accelerator change rate is less than or equal to the preset change rate threshold), it is determined that the start mode intended by the driver is the stable start mode. Alternatively, it is determined whether the driver request torque is greater than or equal to a first wheel end torque threshold; if so, it is determined that the start mode intended by the driver is the rapid start mode; and if not, it is determined that the start mode intended by the driver is the stable start mode.

In this embodiment, the limitations of the first accelerator opening degree threshold, the preset change rate threshold and the first wheel end torque threshold are the same as those in the embodiment II, which will not be repeated.

In a specific implementation solution, the above step S710 may be implemented as follows:
when the start mode intended by the driver is the rapid start mode, it is determined that the fuel injection time of the engine 1 is the time when the rotating speed of the engine 1 is greater than 0;
when the start mode intended by the driver is the stable start mode and the cooling liquid temperature of the engine 1 is greater than a preset hot engine start temperature, it is determined that the fuel injection time of the engine 1 is the time when the drag torque of target component is completely unloaded; and
when the start mode intended by the driver is the stable start mode and the cooling liquid temperature of the engine 1 is less than or equal to the preset hot engine start temperature, a correspondence relationship table of a cooling liquid temperature of the engine and a torque limit value of the target component is searched to obtain a target torque limit value of the target component corresponding to the cooling liquid temperature of the engine 1, and it is determined that the fuel injection time of the engine 1 is the time when the drag torque of the target component is less than the target torque limit value.

Further, the correspondence relationship table includes a first correspondence relationship table of the cooling liquid temperature of the engine and the torque limit value of the first motor 2 (that is, the P1 motor), and a second correspondence relationship table of the cooling liquid temperature of the engine and the torque limit value of the clutch 3 (that is, the clutch C0). In the first correspondence relationship table, the cooling liquid temperature of the engine is inversely proportional to the torque limit value of the first motor 2. In the second correspondence relationship table, the cooling liquid temperature of the engine is inversely proportional to the torque limit value of the clutch 3. In the above correspondence relationship tables, the cooling liquid temperature of the engine and the corresponding torque limit value are calibrated according to the actual vehicle performance; and the torque limit value corresponding to each temperature is a critical value which may cause start failure or reduction of the rotating speed of the engine due to no fuel injection when the cooling liquid temperature of the engine is below the preset hot engine start temperature and the drag torque of the target component reaches the limit value. The preset hot engine start temperature may be set according to the property parameters of the engine 1 in the practical application, and may be generally set to 60°C.

The following table 2 and table 3 exemplarily show the first correspondence relationship table of the cooling liquid temperature of the engine and the torque limit value of the P1 motor, and the second correspondence relationship table of the cooling liquid temperature of the engine and the torque limit value of the clutch C0.

**Table 2 The first correspondence relationship table of the cooling liquid temperature of the engine and the torque limit value of the P1 motor**

| | | | | | | |
|---|---|---|---|---|---|---|
| The cooling liquid temperature of the engine (°C) | -5 | 10 | 25 | 35 | 45 | 60 |
| Torque limit value (N·m) | 75 | 65 | 55 | 50 | 45 | 10 |

**Table 3 The second correspondence relationship table of the cooling liquid temperature of the engine and the torque limit value of the clutch C0**

| | | | | | | |
|---|---|---|---|---|---|---|
| The cooling liquid temperature of the engine (°C) | -5 | 10 | 25 | 35 | 45 | 60 |
| Torque limit value (N·m) | 75 | 65 | 55 | 50 | 45 | -3 |

In a practical application solution, the cooling liquid temperatures and the torque limit values in the first and second correspondence relationship tables are a one-to-one correspondence linear relationship. When the table is searched, for the cooling liquid temperature of the engine falling between the temperature points of the table 2 or the table 3, the torque limit value corresponding to the cooling liquid temperature of the engine may be calculated by an interpolation method. In another practical application solution, a cooling liquid temperature interval in the first and second correspondence relationship tables corresponds to a torque limit value. For example, the torque limit value corresponding to the temperature interval less than or equal to -5°C is 75 N·m, the torque limit value corresponding to the temperature interval greater than -5°C and less than or equal to 10°C is 65 N·m, and so on. When the table is searched, the torque limit value corresponding to the cooling liquid temperature of the engine is determined according to the temperature interval where the cooling liquid temperature of the engine is.

Further, in an implementation solution, after the fuel injection time of the engine 1 under different conditions is determined, the above step S712 may be implemented according to different conditions. Specifically, when the start mode intended by the driver is the rapid start mode, the current rotating speed of the engine 1 is acquired in real time in the process where the target component drags the engine 1 to start; and when the current rotating speed of the engine 1 is greater than 0, the engine 1 is controlled to inject fuel. When the start mode intended by the driver is the stable start mode, the drag torque of the target component is acquired in real time in the process where the target component drags the engine 1 to start; in a case that the cooling liquid temperature of the engine 1 is greater than the preset hot engine start temperature, the engine 1 is controlled to inject fuel when the drag torque of the target component is completely unloaded; and in a case that the cooling liquid temperature of the engine 1 is less than or equal to the preset hot engine start temperature, the engine 1 is controlled to inject fuel when the drag torque of the target component is less than the target torque limit value. In this implementation solution, the standard of completely unloading the drag torque of the target component may be set according to the practical application requirements. Generally, when the drag torque of the target component is less than a preset torque lower limit value, it may be considered that the drag torque of the target component has been completely unloaded. In one example, the preset torque lower limit value of the P1 motor may be set to 10 N·m, that is, when the drag torque of the P1 motor is less than 10 N·m, it may be considered that the drag torque of the P1 motor has been completely unloaded. The preset torque lower limit value of the clutch C0 may be set to -3 N m, that is, when the drag torque of the clutch C0 is less than -3 N·m, it may be considered that the drag torque of the clutch C0 has been completely unloaded.

In this embodiment, for the rapid start mode, the fuel injection time of the engine 1 is the time when the rotating speed of the engine 1 is greater than 0, that is, the engine 1 does not delay fuel injection, thereby ensuring the response speed of rapid start. For the stable start mode and the situation that the cooling liquid temperature of the engine 1 is greater than the preset hot engine start temperature (that is, hot engine start), the fuel injection time of the engine 1 is the time when the drag torque of the first motor 2 or the clutch 3 is completely unloaded, that is, the engine 1 delays fuel injection (it may be defined as delayed fuel injection) until the drag torque is completely unloaded, so that the disturbance impact caused by that the torque of the first motor 2 or the clutch 3 is not completely unloaded can be avoided, and the start smoothness can be improved. For the stable start mode and the situation that the cooling liquid temperature of the engine 1 is less than or equal to the preset hot engine start temperature (that is, cold engine start), the fuel injection time of the engine 1 is the time when the drag torque of the first motor 2 or the clutch 3 is less than the target torque limit value. At this time, the engine 1 does not need to wait for the drag torque to be completely unloaded before injecting fuel, but may start to inject fuel (it may be defined as advanced fuel injection) when the drag torque of the first motor 2 or the clutch 3 is less than the corresponding target torque limit value, so reduction of the rotating speed or start failure of the engine 1 is avoided.

Of course, those skilled in the art should realize that in this embodiment, step S712 is performed in the process where the target component (the P1 motor or clutch C0) drags the engine 1 to start, especially in the stable start mode, whether to control the engine 1 for delayed fuel injection or advanced fuel injection is performed in the process of unloading the drag torque after the target component has dragged the engine 1 to reach the target rotating speed.

### Embodiment IV

This embodiment adopts a clutch start waiting strategy, and is different from the embodiment I in that step S304 is specifically implemented as step S804 to step S808.

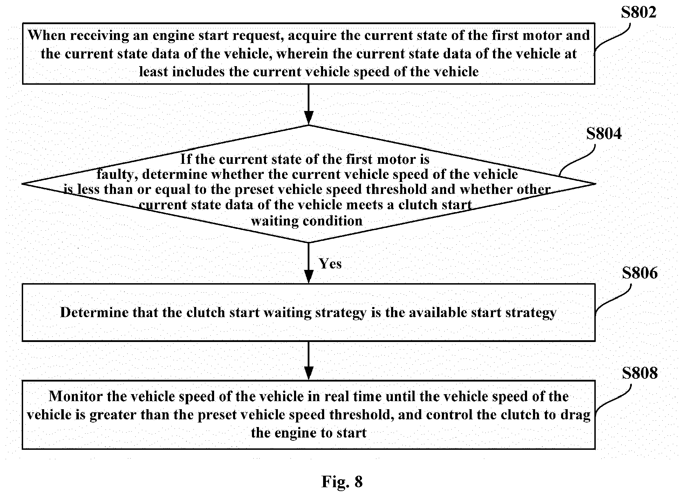

Specifically, referring to FIG. 8, the start method for the engine in the dual-motor hybrid power system provided by this embodiment at least may include the following step S802 to step S808.

Step S802: when an engine start request is received, the current state of the first motor 2 and the current state data of the vehicle are acquired, wherein the current state data of the vehicle at least includes the current vehicle speed of the vehicle.

Step S804: if the current state of the first motor 2 is faulty, it is determined whether the current vehicle speed of the vehicle is less than or equal to the preset vehicle speed threshold and whether other current state data of the vehicle meets a clutch start waiting condition. If so, that is, the current vehicle speed of the vehicle is less than or equal to the preset vehicle speed threshold and the other current state data of vehicle meets the clutch start waiting condition, step S806 is performed.

Step S806: it is determined that the clutch start waiting strategy is the available start strategy. Then, the clutch start waiting strategy is executed, specifically as step S808.

Step S808: the vehicle speed of the vehicle is monitored in real time until the vehicle speed of the vehicle is greater than the preset vehicle speed threshold, and the clutch 3 is controlled to drag the engine 1 to start.

In this embodiment, the definition of the preset vehicle speed threshold is the same as the above.

In the start method for the engine in the dual-motor hybrid power system provided by the embodiment of the present invention, by defining the clutch start waiting strategy after the failure of the P1 motor, even if there is an engine start request when the P1 motor is in failure and the vehicle speed is less than or equal to the preset vehicle speed threshold, the 12V start is not performed, but the clutch start is performed when the vehicle speed is increased to be greater than the preset vehicle speed threshold and meet the vehicle speed condition for the clutch start, so that noise and vibration generated during the 12V start are avoided, and the NVH property and the stability of the engine start are improved.

Further, the clutch start waiting condition may include a condition that the vehicle is accelerated, and a condition that the vehicle does not require the engine to operate all the time. When the condition that the vehicle is accelerated is met, it may be ensured that the vehicle may reach the vehicle speed required by clutch start in a short time, thereby avoiding that normal operation of the vehicle cannot be ensured due to excessively long waiting time. When the condition that the vehicle does not require the engine to operate all the time is met, the rationality of the clutch start waiting strategy and the normal operation of the vehicle may be ensured.

Specifically, the current state data of the vehicle may further include an acceleration or an accelerator opening degree (may also be called accelerator pedal opening degree) and a driving mode of the vehicle; Correspondingly, the condition that the vehicle has the requirement on acceleration includes that the acceleration is a positive value (that is, the vehicle has a positive acceleration) and is greater than a preset acceleration threshold, or the accelerator opening degree is greater than a second accelerator opening degree threshold (indicating that the accelerator pedal is in an activated state). The preset acceleration threshold and the second accelerator opening degree threshold may be set according to the practical application requirements. For example, the preset acceleration threshold may be set to 0.4 m/s², and the second accelerator opening degree threshold may be set to 5%. The condition that the vehicle does not require the engine to operate all the time includes that the driving mode of the vehicle is not equal to a sport mode. The hybrid electric vehicle generally may have a plurality of driving modes, such as an energy-saving mode, an ordinary mode, a sport mode and the like. In the sport mode, the engine will be required to run all the time to ensure a high-power requirement of the sport mode, so the clutch start waiting strategy cannot be available in the sport mode.

In one further implementation solution, the current state data of the vehicle may further include a driver request torque. The driver request torque refers to a requested wheel torque of the driver. Correspondingly, the clutch start waiting condition may further include that the driver request torque is less than a second wheel end torque threshold. The second wheel end torque threshold may be set according to the practical application requirement, for example, the second wheel end torque threshold may be set to 1000 N·m. When the driver request torque is low, it indicates that the start response speed required by a user is low. In this case, the clutch start waiting strategy is available, so that the NVH performance and the stability can be improved, and at the same time, influence on the acceleration driving experience of the user will be avoided as much as possible.

It should be noted that in this embodiment, the other current state data (such as the acceleration, the accelerator opening degree, the driving mode of the vehicle and the like) besides the current vehicle speed of the vehicle may also be acquired after it is determined that the current state of the first motor 2 is faulty, which will not affect the solution of the present invention.

### Embodiment V

This embodiment is different from the embodiment II in that in addition to the pre-dragging torque strategy, the fuel injection control strategy is also adopted. Specifically, in the process that the target component (the first motor 2 or the clutch 3) drags the engine 1 to start, the target component is controlled to output the corresponding pre-dragging torque since receiving the drag start signal, and the fuel injection time of the engine 1 is pertinently controlled according to the cooling liquid temperature of the engine 1 and the start mode intended by the driver, so that the phenomena of start impact, start failure or rotating speed dropping of the engine 1 caused by advanced or delayed oil injection of the engine 1 are avoided, and the start smoothness and safety of the engine 1 are improved.

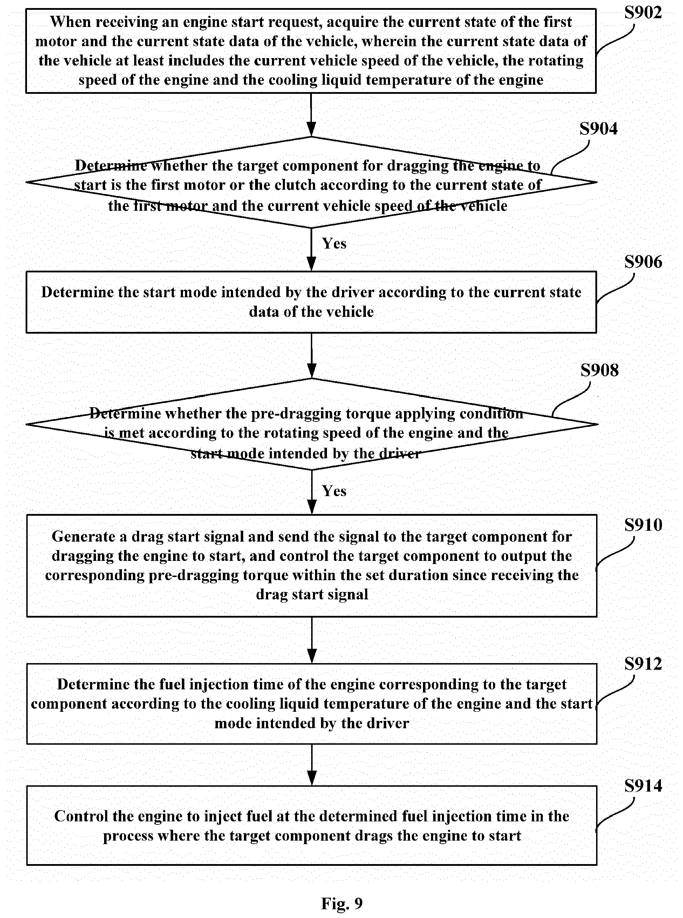

Referring to FIG. 9, the start method for the engine in the dual-motor hybrid power system provided by this embodiment at least may include the following step S902 to step S914.

Step S902: when an engine start request is received, the current state of the first motor 2 and the current state data of the vehicle are acquired, wherein the current state data of the vehicle at least includes the current vehicle speed of the vehicle, the rotating speed of the engine 1 and the cooling liquid temperature of the engine 1.

Step S904: it is determined whether the target component for dragging the engine 1 to start is the first motor 2 or the clutch 3 according to the current state of the first motor 2 and the current vehicle speed of the vehicle. If so, step S906 is performed.

Step S906: the start mode intended by the driver is determined according to the current state data of the vehicle.

Step S908: it is determined whether the pre-dragging torque applying condition is met according to the rotating speed of the engine 1 and the start mode intended by the driver. If so, step S910 is performed.

Step S910: a drag start signal is generated and sent to the target component for dragging the engine 1 to start, and the target component is controlled to output the corresponding pre-dragging torque within the set duration since the drag start signal is received.

Step S912: the fuel injection time of the engine 1 corresponding to the target component is determined according to the cooling liquid temperature of the engine 1 and the start mode intended by the driver.

Step S914: the engine 1 is controlled to inject fuel at the determined fuel injection time in the process where the target component drags the engine 1 to start.

Those skilled in the art may understand that when it is determined in step S904 that the target component is the first motor 2 or the clutch 3, it may be determined that the fuel injection control strategy may be available. When it is determined in step S908 that the pre-dragging torque applying condition is met, it may be determined that the pre-dragging torque strategy may be available.

In this embodiment, the step S904 and step S910 are the same as the step S404 and step S410 respectively, and the steps S906, S912 and S914 are the same as the steps S708, S710 and S712, which will not be described repeatedly. In step S908, the pre-dragging torque applying condition is as described in the embodiment II, which will not be repeated again. Specifically, if the rotating speed of the engine 1 is less than or equal to the preset rotating speed threshold and the start mode intended by the driver is the stable start mode, it is determined that the pre-dragging torque applying condition is met.

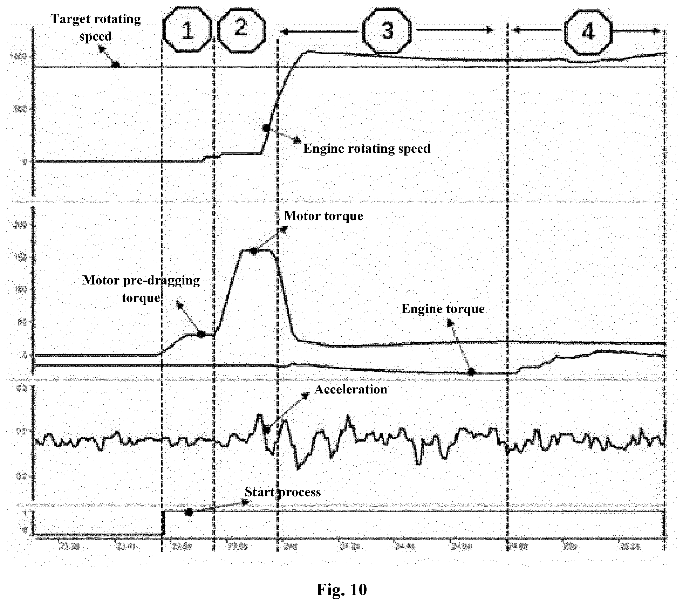

Of course, those skilled in the art should realize that in this embodiment, step S914 is performed in the process where the target component (the P1 motor or the clutch C0) drags the engine 1 to start, especially in the stable start mode, whether to control the engine 1 for delayed fuel injection or advanced fuel injection is performed in the process of unloading the drag torque after the target component has dragged the engine 1 to reach the target rotating speed. Thus, the process where the P1 motor or the clutch C0 drags the engine 1 to start may be divided into four stages: (1) a pre-dragging stage, in which the P1 motor or the clutch C0 outputs the pre-dragging torque to drag the engine 1 to reach a certain rotating speed; (2) an engine dragging stage, in which the P1 motor or the clutch C0 drags the engine 1 to reach the target rotating speed; (3) a torque unloading stage, in which the drag torque of the P1 motor or the clutch C0 is unloaded to about the preset torque lower limit value; and (4) an engine fuel injection stage, in which the engine 1 starts to inject fuel. FIG. 10 exemplarily shows the above four stages in the process of the P1 motor start in the embodiment V. Those skilled in the art may understand that the above four stages also exist in the process of the clutch start in this embodiment.

It should be noted that step S912 may be performed at any time after step S906 and before step S914, but may not necessarily be performed after step S910.

In addition, if it is determined in step S908 that the pre-dragging torque applying condition is not met, steps S912 to S914 may be directly performed.

### Embodiment VI

This embodiment is different from the embodiment II in that in addition to the pre-dragging torque strategy, the clutch start waiting strategy is also adopted. Specifically, before the engine 1 is started by the pre-dragging torque strategy, it is firstly determined whether the clutch start waiting strategy may be available, so that even if there is an engine start request when the P1 motor is in failure and the vehicle speed is less than or equal to the preset vehicle speed threshold, the 12V start is not performed, but the clutch start is performed when the vehicle speed is increased to be greater than the preset vehicle speed threshold and meet the vehicle speed condition for the clutch start.

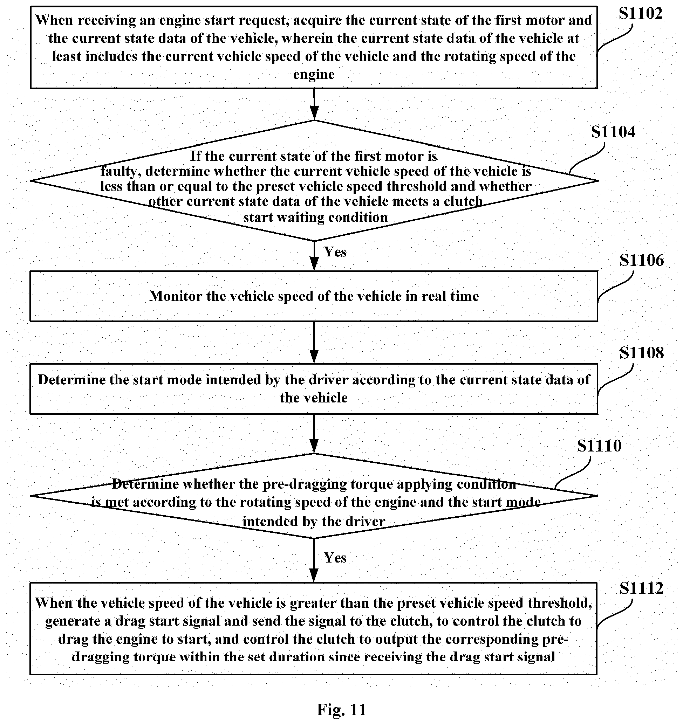

Referring to FIG. 11, the start method for the engine in the dual-motor hybrid power system provided by this embodiment at least may include the following step S1102 to step S1112.

Step S1102: when an engine start request is received, the current state of the first motor 2 and the current state data of the vehicle are acquired, wherein the current state data of the vehicle at least includes the current vehicle speed of the vehicle and the rotating speed of the engine 1.

Step S1104: if the current state of the first motor 2 is faulty, it is determined whether the current vehicle speed of the vehicle is less than or equal to the preset vehicle speed threshold and whether other current state data of the vehicle meets the clutch start waiting condition. If so, that is, the current vehicle speed of the vehicle is less than or equal to the preset vehicle speed threshold and the other current state data of vehicle meets the clutch start waiting condition, step S1106 is performed.

Step S1106: the vehicle speed of the vehicle is monitored in real time.

Step S1108: the start mode intended by the driver is determined according to the current state data of the vehicle.

Step S1110: it is determined whether the pre-dragging torque applying condition is met according to the rotating speed of the engine 1 and the start mode intended by the driver. If so, step S1112 is performed.

Step S1112: when the vehicle speed of the vehicle is greater than the preset vehicle speed threshold, a drag start signal is generated and sent to the clutch 3, to control the clutch 3 to drag the engine 1 to start, and control the clutch 3 to output the corresponding pre-dragging torque within the set duration since receiving the drag start signal.

Those skilled in the art may understand that when it is determined in step S1104 that the current vehicle speed of the vehicle is less than or equal to the preset vehicle speed threshold and the other current state data of the vehicle meets the clutch start waiting condition, it may be determined that the clutch start waiting strategy may be available. When it is determined in step S1110 that the pre-dragging torque applying condition is met, it may be determined that the pre-dragging torque strategy may be available.

In this embodiment, step S1104 is the same as step S804, and steps S1108 and S1110 are the same as the steps S708 and S908 respectively, which will not be described repeatedly.

In step S1112, when it is monitored in real time that the vehicle speed of the vehicle is greater than the preset vehicle speed threshold (that is, the vehicle speed meets the vehicle speed condition for the clutch start), the drag start signal is generated and sent to the clutch 3. The clutch 3 drags the engine 1 to start in response to the drag start signal, and outputs the corresponding pre-dragging torque within the set duration since receiving the drag start signal, thereby preventing the drag torque of the clutch 3 from being directly increased to the maximum value. The limitations of the set duration and the pre-dragging torque here are the same as those in the embodiment II, which will not be elaborated again.

It should be noted that the performing sequence between steps S1108 and S1110 and step S1106 is not fixed. Steps S1108 and S1110 may alternatively be performed at the same time as step S1106, or before step S1106.

Of course, if the current state of the first motor 2 acquired in step S1102 is normal and it is determined that the first motor 2 serves as the target component for dragging the engine 1 to start, the subsequent steps are the same as the steps in the embodiment II in a case that the target component is the first motor 2, which will not be elaborated herein.

In this embodiment, on the basis of improving the start smoothness by means of the pre-dragging torque strategy, by defining the clutch start waiting strategy after the failure of the P1 motor, even if there is an engine start request when the P1 motor is in failure and the vehicle speed is less than or equal to the preset vehicle speed threshold, the 12V start is not performed, but the clutch start is performed when the vehicle speed is increased to be greater than the preset vehicle speed threshold and meet the vehicle speed condition for the clutch start, so that noise and vibration generated during the 12V start are avoided, and the NVH property and the stability of the engine start are improved.

### Embodiment VII

This embodiment is different from the embodiment III in that in addition to the fuel injection control strategy, the clutch start waiting strategy is also adopted. Specifically, before the engine 1 is started, it is firstly determined whether the clutch start waiting strategy may be available, so that even if there is an engine start request when the P1 motor is in failure and the vehicle speed is less than or equal to the preset vehicle speed threshold, the 12V start is not performed, but the clutch start is performed when the vehicle speed is increased to be greater than the preset vehicle speed threshold and meet the vehicle speed condition for the clutch start

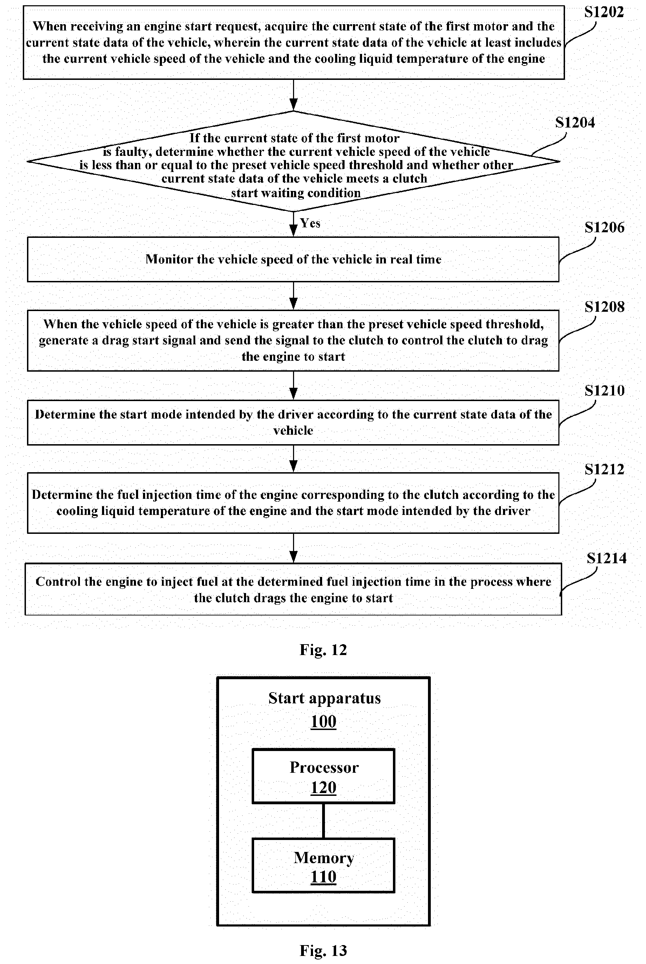

Referring to FIG. 12, the start method for the engine in the dual-motor hybrid power system provided by this embodiment at least may include the following step S1202 to step S1214.

Step S1202: when an engine start request is received, the current state of the first motor 2 and the current state data of the vehicle are acquired, wherein the current state data of the vehicle at least includes the current vehicle speed of the vehicle and the cooling liquid temperature of the engine 1.

Step S1204: if the current state of the first motor 2 is faulty, it is determined whether the current vehicle speed of the vehicle is less than or equal to the preset vehicle speed threshold and whether other current state data of the vehicle meets the clutch start waiting condition. If so, that is, the current vehicle speed of the vehicle is less than or equal to the preset vehicle speed threshold and the other current state data of vehicle meets the clutch start waiting condition, step S1206 is performed.

Step S1206: the vehicle speed of the vehicle is monitored in real time.

Step S1208: when the vehicle speed of the vehicle is greater than the preset vehicle speed threshold, a drag start signal is generated and sent to the clutch 3 to control the clutch 3 to drag the engine 1 to start.

Step S1210: the start mode intended by the driver is determined according to the current state data of the vehicle.

Step S1212: the fuel injection time of the engine 1 corresponding to the clutch 3 is determined according to the cooling liquid temperature of the engine 1 and the start mode intended by the driver.

Step S1214: the engine 1 is controlled to inject fuel at the determined fuel injection time in the process that the clutch 3 drags the engine 1 to start.

Those skilled in the art may understand that when it is determined in step S1204 that the current vehicle speed of the vehicle is less than or equal to the preset vehicle speed threshold and the other current state data of the vehicle meets the clutch start waiting condition, it may be determined that the clutch start waiting strategy may be available.

In this embodiment, step S1204 is the same as step S804, and steps S1210, S1212 and S1114 are the same as steps S708, S710 and S712 respectively, which will not be described repeatedly.

It should be noted that steps S1210 and S1212 may alternatively be performed at any time after step S1204 and before step S1214. For example, steps S1210 and S1212 may be performed in the period of monitoring the vehicle speed of the vehicle in real time and before step S1208.

Of course, if the current state of the first motor 2 acquired in step S1202 is normal and it is determined that the first motor 2 serves as the target component for dragging the engine 1 to start, the subsequent steps are the same as the steps in the embodiment III in a case that the target component is the first motor 2, which will not be elaborated herein.

In this embodiment, the start smoothness and safety of engine start are improved by the fuel injection control strategy, and at the same time, the NVH performance and the stability of engine start are improved by the clutch start waiting strategy.

### Embodiment VIII

This embodiment is different from the embodiment V in that before the engine 1 is started by the pre-dragging torque strategy, it is determined whether the clutch start waiting strategy may be available. Specifically, the start method for the engine in the dual-motor hybrid power system provided by this embodiment at least may include the following steps:
(1) When an engine start request is received, the current state of the first motor 2 is acquired. Step (2) is performed if the current state of the first motor 2 is faulty; and step (11) is performed if the current state of the first motor 2 is normal.
(2) The current state data of the vehicle is acquired, wherein the current state data of the vehicle at least includes the current vehicle speed of the vehicle, the rotating speed of the engine 1 and the cooling liquid temperature of the engine 1. Then step (3) is performed.
(3) It is determined whether the current vehicle speed of the vehicle is less than or equal to the preset vehicle speed threshold and whether other current state data of the vehicle meets the clutch start waiting condition. If so, that is, the current vehicle speed of the vehicle is less than or equal to the preset vehicle speed threshold and the other current state data of the vehicle meets the clutch start waiting condition, step (4) is performed.
(4) The vehicle speed of the vehicle is monitored in real time; and then step (5) is performed.
(5) The start mode intended by the driver is determined according to the current state data of the vehicle; and then step (6) is performed.

The step of determining the start mode intended by the driver is as described above.
(6) It is determined whether the pre-dragging torque applying condition is met according to the rotating speed of the engine 1 and the start mode intended by the driver. If so, step (7) is performed, and if not, step (8) is performed.

The step of determining whether the pre-dragging torque applying condition is met is as described above.
(7) When the vehicle speed of the vehicle is greater than the preset vehicle speed threshold, a first drag start signal is generated and sent to the clutch 3, so as to control the clutch 3 to drag the engine 1 to start and control the clutch 3 to output the corresponding pre-dragging torque within the set duration since receiving the first drag start signal. Then step (9) is performed.
(8) When the vehicle speed of the vehicle is greater than the preset vehicle speed threshold, a second drag start signal is generated and sent to the clutch 3, so as to control the clutch 3 to drag the engine 1 to start. Then, step (9) is performed.

In this step, in a case that the pre-dragging torque applying condition is not met, the clutch start in an existing mode without a pre-dragging torque is performed.
(9) The fuel injection time of the engine 1 corresponding to the clutch 3 is determined according to the cooling liquid temperature of the engine 1 and the start mode intended by the driver. Then step (10) is performed.
(10) The engine 1 is controlled to inject fuel at the determined fuel injection time in the process where the clutch 3 drags the engine 1 to start, so that start of the engine 1 is completed.
(11) The current state data of the vehicle is acquired, wherein the current state data of the vehicle at least includes the rotating speed of the engine 1 of the vehicle and the cooling liquid temperature of the engine 1. Then step (12) is performed.
(12) The start mode intended by the driver is determined according to the current state data of the vehicle. Then step (13) is performed.
(13) It is determined whether the pre-dragging torque applying condition is met according to the rotating speed of the engine 1 and the start mode intended by the driver. If so, step (14) is performed, and if not, step (15) is performed.

The step of determining whether the pre-dragging torque applying condition is met is as described above.
(14) A third drag start signal is generated and sent to the first motor 2, so as to control the first motor 2 to drag the engine 1 to start and control the first motor 2 to output the corresponding pre-dragging torque within the set duration since receiving the third drag start signal. Then step (16) is performed.
(15) A fourth drag start signal is generated and sent to the first motor 2 so as to control the first motor 2 to drag the engine 1 to start. Then, step (16) is performed.
(16) The fuel injection time of the engine 1 corresponding to the first motor 2 is determined according to the cooling liquid temperature of the engine 1 and the start mode intended by the driver. Then step (17) is performed.
(17) The engine 1 is controlled to inject fuel at the determined fuel injection time in the process where the first motor 2 drags the engine 1 to start, so that start of the engine 1 is completed.

This embodiment defines the clutch start waiting strategy after the failure of the P1 motor in combination with the pre-dragging torque strategy and the fuel injection strategy in the P1 motor start or clutch start, so that the start smoothness and safety of the engine 1 can be effectively improved.

Based on the same technical concept, the embodiments of the present invention further provide a start apparatus 100 for an engine in a dual-motor hybrid power system. As shown in FIG. 13, the start apparatus 100 includes a memory 110 and a processor 120. A control program is stored in the memory 110. The control program, when being executed by the processor 120, is used to implement the start method for the engine in the dual-motor hybrid power system in any one of the above embodiments or embodiment combinations.

In the start apparatus provided by this embodiment, at least one of the pre-dragging torque strategy, the fuel injection control strategy and the clutch start waiting strategy may be selected according to the current state of the first motor and the current state data of the vehicle; and at least the start smoothness of engine start is improved through these strategies.

Based on the same technical concept, the embodiments of the present invention further provide a hybrid electric vehicle, including a dual-motor hybrid power system, and the start apparatus 100 for the engine in the dual-motor hybrid power system described in the above embodiments. The dual-motor hybrid power system may be referred to FIG. 1.

According to any optional embodiment or a combination of multiple optional embodiments, the embodiments of the present invention can achieve the following beneficial effects:
In the start method and apparatus for the engine in the dual-motor hybrid power system provided by the embodiments of the present invention, at least one of the pre-dragging torque strategy, the fuel injection control strategy and the clutch start waiting strategy is selected to start the engine according to the current state of the first motor and the current state data of the vehicle, and at least the start smoothness of the engine is improved through these strategies.

Further, in a case that the target component is the first motor or the clutch and the pre-dragging torque applying condition is met, the pre-dragging torque strategy can be executed. Specifically, the target component is controlled to output the corresponding pre-dragging torque within the set duration since receiving the drag start signal, so that the target component drags the engine to a certain rotating speed by the pre-dragging torque before the drag torque of the target component is increased to the maximum value to drag the engine to achieve the target rotating speed. In this way, the drag torque of the target component will not be increased to the maximum value directly, but an intermediate value (that is, the value of the pre-dragging torque) is reached first before the maximum value is reached, so that impact caused by the overquick rising of the drag torque in the start process is avoided, and the start smoothness of the engine is effectively improved.

Further, in a case that the target component is the first motor or the clutch, the fuel injection control strategy may be executed. Specifically, the start mode intended by the driver may be determined according to the current state data of the vehicle, and then the fuel injection time of the engine corresponding to the target component (the first motor, namely the P1 motor, or the clutch) is determined according to the cooling liquid temperature of the engine and the start mode intended by the driver, so that the time when the engine starts to inject fuel can be controlled pertinently in the process of the P1 motor start or the clutch start, the phenomena of start impact, start failure or rotating speed dropping of the engine caused by advanced or delayed oil injection of the engine are avoided, and the start smoothness and safety of the engine are improved.

Further, in a case that the first motor is in failure, the vehicle speed is less than or equal to the preset vehicle speed threshold and the clutch start waiting condition is met, the clutch start waiting strategy may be executed. Specifically, the vehicle speed of the vehicle is monitored in real time until the vehicle speed of the vehicle is greater than the preset vehicle speed threshold, and then the clutch is controlled to drag the engine to start. Therefore, even if there is an engine start request when the P1 motor is in failure and the vehicle speed is less than or equal to the preset vehicle speed threshold, the 12V start is not performed, but the clutch start is performed when the vehicle speed is increased to be greater than the preset vehicle speed threshold and meet the vehicle speed condition for the clutch start, so that noise and vibration generated during the 12V start are avoided, and the NVH property and the stability of the engine start are improved.

Further, in the process of the clutch start, the second motor (that is, a driving motor) is subjected to active damping control, so that jittering of the second motor in the process of the clutch start can be avoided, and the start smoothness is further improved.

## Claims

1. A start method for an engine (1) in a dual-motor hybrid power system, the dual-motor hybrid power system comprising the engine (1), a first motor (2) connected to the engine (1), and a clutch (3) connected between the first motor (2) and a gear shift system (5); the start method comprising:when receiving an engine start request, acquiring a current state of the first motor (2) and current state data of a vehicle (S302);
characterizedin that the start method further comprises: determining an available start strategy according to the current state of the first motor (2) and the current state data of the vehicle, and executing the available start strategy to start the engine, wherein the available start strategy comprises at least one of the following: a pre-dragging torque strategy, and a clutch start waiting strategy in which it is waiting for a vehicle speed of the vehicle to be increased to be greater than a preset vehicle speed threshold and the clutch is controlled to drag the engine to start when the vehicle speed of the vehicle has been increased to be greater than the preset vehicle speed (S304);
wherein the current state data of the vehicle at least comprises a current vehicle speed of the vehicle; and
the step of determining an available start strategy according to the current state of the first motor (2) and the current state data of the vehicle, and executing the available start strategy to start the engine comprises:
determining whether a target component that is going to drag the engine (1) to start is the first motor (2) or the clutch (3) according to the current state of the first motor (2) and the current vehicle speed of the vehicle (S404);
in response to that the target component that is going to drag the engine (1) to start is the first motor (2) or the clutch (3), determining whether a pre-dragging torque applying condition is met according to the current state data of the vehicle (S406);
in response to that the pre-dragging torque applying condition is met, determining that the pre-dragging torque strategy is the available start strategy (S408); and
executing the pre-dragging torque strategy, comprising: generating a drag start signal and sending the signal to the target component, and controlling the target component to output a corresponding pre-dragging torque within a set duration since receiving the drag start signal (S410); and
after the target component has completed the output of the pre-dragging torque, increasing the drag torque output by the target component to a maximum drag torque that is required to drag the engine to a target rotating speed, so as to drag the engine to reach the target rotating speed, the pre-dragging torque being smaller than the maximum drag torque.

2. The start method according to claim 1, wherein
the current state data of the vehicle further comprises a rotating speed of the engine (1) and an accelerator state or a driver request torque; and
the pre-dragging torque applying condition comprises that the rotating speed of the engine (1) is less than or equal to a preset rotating speed threshold and a start mode intended by the driver is a stable start mode, wherein
the accelerator state comprises an accelerator opening degree and an accelerator change rate; and
the step of determining whether the pre-dragging torque applying condition is met according to the current state data of the vehicle comprises:
determining whether the acquired rotating speed of the engine (1) is less than or equal to the preset rotating speed threshold; and
determining whether the start mode intended by the driver is the stable start mode according to the acquired accelerator opening degree and accelerator change rate or according to the acquired driver request torque.

3. The start method according to claim 2, wherein
the step of determining whether the start mode intended by the driver is the stable start mode according to the acquired accelerator opening degree and accelerator change rate, or according to the acquired driver request torque comprises:
determining whether the accelerator opening degree is greater than a first accelerator opening degree threshold and the accelerator change rate is greater than a preset change rate threshold; if not, determining that the start mode intended by the driver is the stable start mode; or
determining whether the driver request torque is less than or equal to a first wheel end torque threshold; if so, determining that the start mode intended by the driver is the stable start mode.

4. The start method according to claim 1, wherein the current state data of the vehicle further comprises a cooling liquid temperature of the engine (1); and
the step of determining an available start strategy according to the current state of the first motor (2) and the current state data of the vehicle, and executing the available start strategy to start the engine further comprises:
when it is determined that the target component is the first motor or the clutch, determining that a fuel injection control strategy is the available start strategy (S706); and
executing the fuel injection control strategy, comprising: determining a start mode intended by a driver according to the current state data of the vehicle (S708);
determining a fuel injection time of the engine (1) corresponding to the target component according to the cooling liquid temperature of the engine (1) and the start mode intended by the driver (S708); and
controlling the engine (1) to inject fuel at the determined fuel injection time in the process where the target component drags the engine (1) to start (S712).

5. The start method according to claim 4, wherein
the current state data of the vehicle further comprises an accelerator state or a driver request torque; and
the start mode intended by the driver comprises a rapid start mode and a stable start mode, wherein
the accelerator state comprises an accelerator opening degree and an accelerator change rate; and
the step of determining the start mode intended by the driver according to the current state data of the vehicle comprises:
determining whether the accelerator opening degree is greater than a first accelerator opening degree threshold and the accelerator change rate is greater than a preset change rate threshold;
in response to that the accelerator opening degree is greater than the first accelerator opening degree threshold and the accelerator change rate is greater than the preset change rate threshold, determining that the start mode intended by the driver is the rapid start mode;
in response to that the accelerator opening degree is not greater than the first accelerator opening degree threshold and or accelerator change rate is not greater than the preset change rate threshold, determining that the start mode intended by the driver is the stable start mode; or
determining whether the driver request torque is greater than a first wheel end torque threshold;
in response to that the driver request torque is greater than the first wheel end torque threshold, determining that the start mode intended by the driver is the rapid start mode;
in response to that the driver request torque is not greater than the first wheel end torque threshold, determining that the start mode intended by the driver is the stable start mode.

6. The start method according to claim 5, wherein
the step of determining the fuel injection time of the engine (1) corresponding to the target component according to the cooling liquid temperature of the engine (1) and the start mode intended by the driver comprises:
when the start mode intended by the driver is the rapid start mode, determining that the fuel injection time of the engine (1) is the time when the rotating speed of the engine (1) is greater than 0;
when the start mode intended by the driver is the stable start mode and the cooling liquid temperature of the engine (1) is greater than a preset hot engine start temperature, determining that the fuel injection time of the engine (1) is the time when a drag torque of the target component is completely unloaded; and
when the start mode intended by the driver is the stable start mode and the cooling liquid temperature of the engine (1) is less than or equal to the preset hot engine start temperature, searching a correspondence relationship table between a cooling liquid temperature of the engine and a torque limit value of the target component to obtain a target torque limit value of the target component corresponding to the cooling liquid temperature of the engine (1), and determining that the fuel injection time of the engine (1) is the time when the drag torque of the target component is less than the target torque limit value.

7. The start method according to claim 6, wherein
the step of controlling the engine (1) to inject fuel at the determined fuel injection time in the process where the target component drags the engine (1) to start comprises:
when the start mode intended by the driver is the rapid start mode, acquiring a current rotating speed of the engine (1) in real time in the process where the target component drags the engine (1) to start;
when the current rotating speed of the engine (1) is greater than 0, controlling the engine (1) to inject fuel;
when the start mode intended by the driver is the stable start mode, acquiring the drag torque of the target component in real time in the process where the target component drags the engine (1) to start;
in a case that the cooling liquid temperature of the engine is greater than the preset hot engine start temperature, when the drag torque of the target component is completely unloaded, controlling the engine (1) to inject fuel; and
in a case that the cooling liquid temperature of the engine (1) is less than or equal to the preset hot engine start temperature, when the drag torque of the target component is less than the target torque limit value, controlling the engine (1) to inject fuel.

8. The start method according to claim 1, wherein
the step of determining whether the target component is the first motor (2) or the clutch (3) according to the current state of the first motor (2) and the current vehicle speed of the vehicle comprises:
in response to that the current state of the first motor (2) is normal, determining that the target component is the first motor (2); and
in response to that the current state of the first motor (2) is faulty and the current vehicle speed of the vehicle is greater than a preset vehicle speed threshold, determining that the target component is the clutch (3).

9. The start method according to claim 1, wherein
the step of determining an available start strategy according to the current state of the first motor (2) and the current state data of the vehicle, and executing the available start strategy to start the engine further comprises:
in response to that the current state of the first motor (2) is faulty, determining whether the current vehicle speed of the vehicle is less than or equal to a preset vehicle speed threshold and whether other current state data of the vehicle meets a clutch start waiting condition (S804);
in response to that the current vehicle speed of the vehicle is less than or equal to the preset vehicle speed threshold and the other current state data of the vehicle meets the clutch start waiting condition, determining that the clutch start waiting strategy is the available start strategy (S806); and
executing the clutch start waiting strategy, comprising: monitoring the vehicle speed of the vehicle in real time until the vehicle speed of the vehicle is greater than the preset vehicle speed threshold, and controlling the clutch (3) to drag the engine (1) to start (S808).

10. The start method according to claim 9, wherein
the clutch start waiting condition comprises a condition that the vehicle is accelerated, and a condition that the vehicle does not require the engine (1) to operate all the time, wherein
the current state data of the vehicle further comprises an acceleration or an accelerator opening degree and a driving mode of the vehicle;
the condition that the vehicle is accelerated comprises:
the acceleration is a positive value and is greater than a preset acceleration threshold, or
the accelerator opening degree is greater than a second accelerator opening degree threshold; and
the condition that the vehicle does not require the engine (1) to operate all the time comprises:
the driving mode of the vehicle is not a sport mode.

11. The start method according to claim 10, wherein
the current state data of the vehicle further comprises a driver request torque; and
the clutch start waiting condition further comprises:
the driver request torque is less than a second wheel end torque threshold.

12. The start method according to any one of claims 1 to 11, wherein the dual-motor hybrid power system further comprises a second motor (7) connected to the gear shift system (5) and used to drive wheels (6); and
in response to that the engine (1) is dragged by the clutch (3) in the start process of the engine (1), the start method further comprises:
in the process where the clutch (3) drags the engine (1) to start, performing active damping control on the second motor (7), wherein
the step of performing active damping control on the second motor (7) comprises:
acquiring a requested rotating speed of a driver and an actual rotating speed of the second motor (7);
calculating a difference value between the requested rotating speed and the actual rotating speed; and
performing proportional-integral control on the second motor (7) according to the difference value, so as to compensate an output torque of the second motor (7).

13. A start apparatus (100) for an engine (1) in a dual-motor hybrid power system, **characterized by** comprising a memory (110) and a processor (120), wherein a control program is stored in the memory (110); and the control program is used to implement the start method according to any one of claims 1-12 when being executed by the processor (120).

14. A hybrid electric vehicle, **characterized by** comprising a dual-motor hybrid power system, and the start apparatus (100) for the engine (1) in the dual-motor hybrid power system according to claim 13.

## Patentansprüche

1. Startverfahren für einen Verbrennungsmotor (1) in einem Zweimotoren-Hybridantriebssystem, wobei das Zweimotoren-Hybridantriebssystem den Verbrennungsmotor (1), einen ersten Motor (2), der mit dem Verbrennungsmotor (1) verbunden ist, und eine Kupplung (3), die zwischen den ersten Motor (2) und ein Gangschaltsystem (5) geschaltet ist, umfasst; wobei das Startverfahren Folgendes umfasst: wenn eine Verbrennungsmotor-Startanforderung empfangen wird, Erfassen eines aktuellen Zustands des ersten Motors (2) und aktueller Zustandsdaten eines Fahrzeugs (S302);
**dadurch gekennzeichnet, dass** das Startverfahren weiterhin umfasst: Bestimmen einer verfügbaren Startstrategie gemäß dem aktuellen Zustand des ersten Motors (2) und den aktuellen Zustandsdaten des Fahrzeugs und Ausführen der verfügbaren Startstrategie zum Starten des Motors, wobei die verfügbare Startstrategie mindestens eines der Folgenden umfasst: eine Vorziehdrehmoment-Strategie und eine Kupplungsstart-Wartestrategie, wobei bei Kupplungsstart-Wartestrategie darauf gewartet wird, dass eine Fahrzeuggeschwindigkeit des Fahrzeugs erhöht wird, so dass sie größer als ein voreingestellter FahrzeuggeschwindigkeitsSchwellenwert ist, und die Kupplung so gesteuert wird, dass sie den Verbrennungsmotor zum Starten zieht, wenn die Fahrzeuggeschwindigkeit des Fahrzeugs erhöht wurde, so dass sie größer als die voreingestellte Fahrzeuggeschwindigkeit ist (S304);
wobei die aktuellen Zustandsdaten des Fahrzeugs zumindest eine aktuelle Fahrzeuggeschwindigkeit des Fahrzeugs umfassen; und
der Schritt des Bestimmens einer verfügbaren Startstrategie gemäß dem aktuellen Zustand des ersten Motors (2) und den aktuellen Zustandsdaten des Fahrzeugs und des Ausführens der verfügbaren Startstrategie zum Starten des Verbrennungsmotors umfasst:
Bestimmen, ob eine Zielkomponente, die den Verbrennungsmotor (1) zum Anlassen bringen wird, der erste Motor (2) oder die Kupplung (3) ist, gemäß dem aktuellen Zustand des ersten Motors (2) und der aktuellen Fahrzeuggeschwindigkeit des Fahrzeugs (S404);
als Reaktion darauf, dass die Zielkomponente, die den Verbrennungsmotor (1) zum Anlassen bringen wird, der erste Motor (2) oder die Kupplung (3) ist, Bestimmen, ob eine Bedingung zum Aufbringen eines Vorziehdrehmoment gemäß den aktuellen Zustandsdaten des Fahrzeugs erfüllt ist (S406);
als Reaktion darauf, dass die Bedingung für das Aufbringen des Vorziehdrehmoment erfüllt ist, Bestimmen, dass die Vorziehdrehmoment-Strategie die verfügbare Startstrategie ist (S408); und
Ausführen der Vorziehdrehmoment-Strategie, umfassend: Erzeugen eines Ziehstartsignals und Senden des Signals an die Zielkomponente, und Steuern der Zielkomponente, um ein entsprechendes Vorziehdrehmoment innerhalb einer eingestellten Dauer seit dem Empfang des Ziehstartsignals auszugeben (S410); und
nachdem die Zielkomponente die Ausgabe des Vorziehdrehmoment abgeschlossen hat, Erhöhen des von der Zielkomponente ausgegebenen Ziehdrehmoment auf ein maximales Ziehdrehmoment, das erforderlich ist, um den Motor auf eine Zieldrehzahl zu ziehen, um den Motor zu ziehen, damit er die Zieldrehzahl erreicht, wobei das Vorziehdrehmoment kleiner als das maximale Ziehdrehmoment ist.

2. Startverfahren nach Anspruch 1, wobei
die aktuellen Zustandsdaten des Fahrzeugs außerdem eine Drehzahl des Verbrennungsmotors (1) und einen Beschleugigerzustand oder ein Fahrerwunschdrehmoment umfassen; und
wobei die Bedingung zum Aufbringen eines Vorziehdrehmoment umfasst, dass die Drehzahl des Verbrennungsmotors (1) kleiner oder gleich einem voreingestellten Drehzahlschwellenwert ist und ein vom Fahrer beabsichtigter Startmodus ein stabiler Startmodus ist, wobei
wobei der Beschleugigerzustand einen Beschleugigeröffnungsgrad und eine Beschleugigeränderungsrate umfasst; und
der Schritt des Bestimmens, ob die Bedingung zum Aufbringen eines Vorziehdrehmoments gemäß den aktuellen Zustandsdaten des Fahrzeugs erfüllt ist, umfasst:
Bestimmen, ob die erfasste Drehzahl des Verbrennungsmotors (1) kleiner oder gleich dem voreingestellten Drehzahlschwellenwert ist; und
Bestimmung, ob es sich bei dem vom Fahrer beabsichtigten Startmodus um den stabilen Startmodus anhand des erfassten Beschleugigeröffnungsgrads und der Beschleugigeränderungsrate oder anhand des erfassten Fahrerwunschdrehmoments handelt.

3. Startverfahren nach Anspruch 2, wobei der Schritt des Bestimmens, ob es sich bei dem vom Fahrer beabsichtigten Startmodus um den stabilen Startmodus anhand des erfassten Beschleugigeröffnungsgrads und der Beschleugigeränderungsrate oder anhand des erfassten Fahrerwunschdrehmoment handelt umfasst:
Bestimmen, ob der Beschleugigeröffnungsgrad größer als ein erster Beschleugigeröffnungsgradschwellenwert ist und die Beschleugigeränderungsrate größer als ein voreingestellter Änderungsratenschwellenwert ist; wenn nicht, Bestimmen, dass der vom Fahrer beabsichtigte Startmodus der stabile Startmodus ist; oder
Bestimmen, ob das Fahrerwunschdrehmoment kleiner oder gleich einem ersten Radenddrehmoment-Schwellenwert ist; wenn ja, Bestimmen, dass der vom Fahrer beabsichtigte Startmodus der stabile Startmodus ist.

4. Startverfahren nach Anspruch 1, wobei die aktuellen Zustandsdaten des Fahrzeugs außerdem eine Kühlflüssigkeitstemperatur des verbrennungsmotors (1) umfassen; und
der Schritt des Bestimmens einer verfügbaren Startstrategie gemäß dem aktuellen Zustand des ersten Motors (2) und den aktuellen Zustandsdaten des Fahrzeugs und des Ausführens der verfügbaren Startstrategie zum Starten des Verbrennungsmotors weiterhin umfasst:
wenn bestimmt wird, dass die Zielkomponente der erste Motor oder die Kupplung ist, Bestimmen, dass eine Kraftstoffeinspritzungssteuerstrategie die verfügbare Startstrategie ist (S706); und
Ausführen der Kraftstoffeinspritzungssteuerstrategie, umfassend: Bestimmen eines von einem Fahrer beabsichtigten Startmodus gemäß den aktuellen Zustandsdaten des Fahrzeugs (S708);
Bestimmen einer Kraftstoffeinspritzzeit des Verbrennungsmotors (1), der der Zielkomponente entspricht, gemäß der Kühlflüssigkeitstemperatur des Verbrennungsmotors (1) und dem vom Fahrer beabsichtigten Startmodus (S708); und
Steuern des Verbrennungsmotors (1), um Kraftstoff zur bestimmten Kraftstoffeinspritzzeit in dem Prozess einzuspritzen, bei dem die Zielkomponente den Verbrennungsmotor (1) zum Starten zieht (S712).

5. Startverfahren nach Anspruch 4, wobei die aktuellen Zustandsdaten des Fahrzeugs außerdem einen Beschleugigerzustand oder ein Fahrerwunschdrehmoment umfassen;
wobei der vom Fahrer beabsichtigte Startmodus einen Schnelle Startmodus und einen stabile Startmodus umfasst, wobei
wobei der Beschleugigerzustand einen Beschleugigeröffnungsgrad und eine Beschleugigeränderungsrate umfasst;
wobei der Schritt des Bestimmens des vom Fahrer beabsichtigten Startmodus anhand der aktuellen Zustandsdaten des Fahrzeugs umfasst:
Bestimmen, ob der Beschleugigeröffnungsgrad größer als ein erster Beschleugigeröffnungsgradschwellenwert ist und die Beschleugigeränderungsrate größer als ein voreingestellter Änderungsratenschwellenwert ist;
als Reaktion darauf, dass der Beschleugigeröffnungsgrad größer als ein erster Beschleugigeröffnungsgradschwellenwert ist und die Beschleugigeränderungsrate größer als ein voreingestellter Änderungsratenschwellenwert ist, Bestimmen, dass der vom Fahrer beabsichtigte Startmodus der Schnelle Startmodus ist; oder
als Reaktion darauf, dass der Beschleugigeröffnungsgrad nicht größer als der erste Beschleugigeröffnungsgradschwellenwert ist und die Beschleugigeränderungsrate nicht größer als der voreingestellte Änderungsratenschwellenwert ist, Bestimmen, dass der vom Fahrer beabsichtigte Startmodus der stabile Startmodus ist; oder
Bestimmen, ob das Fahrerwunschdrehmoment größer als ein erster Radenddrehmoment-Schwellenwert ist;
als Reaktion darauf, dass das Fahrerwunschdrehmoment größer als der erste Radenddrehmoment-Schwellenwert ist, Bestimmen, dass der vom Fahrer beabsichtigte Startmodus der Schnelle Startmodus ist;
als Reaktion darauf, dass das Fahrerwunschdrehmoment nicht größer als der erste Radenddrehmoment-Schwellenwert ist, Bestimmen, dass der vom Fahrer beabsichtigte Startmodus der stabile Startmodus ist.

6. Startverfahren nach Anspruch 5, wobei
der Schritt des Bestimmens der Kraftstoffeinspritzzeit des Verbrennungsmotors (1), der der Zielkomponente entspricht, gemäß der Kühlflüssigkeitstemperatur des Verbrennungsmotors (1) und dem vom Fahrer beabsichtigten Startmodus umfasst:
wenn der vom Fahrer beabsichtigte Startmodus der Schnelle Startmodus ist, Bestimmen, dass die Kraftstoffeinspritzzeit des Verbrennungsmotors (1) die Zeit ist, in der die Drehzahl des Verbrennungsmotors (1) größer als 0 ist;
wenn der vom Fahrer beabsichtigte Startmodus der stabile Startmodus ist und die Kühlflüssigkeitstemperatur des Verbrennungsmotors (1) größer als eine voreingestellte Warmstarttemperatur des Verbrennungsmotors ist, Bestimmen, dass die Kraftstoffeinspritzzeit des Verbrennungsmotors (1) der Zeitpunkt ist, zu dem ein Ziehdrehmoment der Zielkomponente vollständig entlastet wird; und
wenn der vom Fahrer beabsichtigte Startmodus der stabile Startmodus ist und die Kühlflüssigkeitstemperatur des Verbrennungsmotors (1) kleiner oder gleich der voreingestellten Warmstarttemperatur des Verbrennungsmotors ist, Durchsuchen einer Korrespondenzbeziehungstabelle zwischen einer Kühlflüssigkeitstemperatur des Verbrennungsmotors und einem Drehmomentgrenzwert der Zielkomponente, um einen Zieldrehmomentgrenzwert der Zielkomponente zu erhalten, der der Kühlflüssigkeitstemperatur des Verbrennungsmotors (1) entspricht, und Bestimmen, dass die Kraftstoffeinspritzzeit des Verbrennungsmotors (1) der Zeitpunkt ist, zu dem das Ziehdrehmoment der Zielkomponente unter dem Zieldrehmomentgrenzwert liegt.

7. Startverfahren nach Anspruch 6, wobei der Schritt des Steuerns des Verbrennungsmotors (1), um Kraftstoff zur bestimmten Kraftstoffeinspritzzeit in dem Prozess einzuspritzen, bei dem die Zielkomponente den Verbrennungsmotor (1) zum Starten zieht, umfasst:
wenn der vom Fahrer beabsichtigte Startmodus der Schnelle Startmodus ist, Erfassen einer aktuellen Drehzahl des Verbrennungsmotors (1) in Echtzeit in dem Prozess, bei dem die Zielkomponente den Verbrennungsmotor (1) zum Starten zieht;
wenn die aktuelle Drehzahl des Verbrennungsmotors (1) größer als 0 ist, Steuern des Verbrennungsmotors (1), um Kraftstoff einzuspritzen;
wenn der vom Fahrer beabsichtigte Startmodus der stabile Startmodus ist, Erfassen einer Ziehdrehmoment des Zielkomponente in Echtzeit in dem Prozess, bei dem die Zielkomponente den Verbrennungsmotor (1) zum Starten zieht;
in einem Fall, in dem die Kühlflüssigkeitstemperatur des Verbrennungsmotors größer ist als die voreingestellte Warmstarttemperatur des Verbrennungsmotors, wenn das Ziehdrehmoment der Zielkomponente vollständig entlastet ist, Steuern des Verbrennungsmotors (1), um Kraftstoff einzuspritzen; und
in einem Fall, in dem die Kühlflüssigkeitstemperatur des Verbrennungsmotors (1) kleiner oder gleich der voreingestellten Warmstarttemperatur des Verbrennungsmotors ist, wenn das Ziehdrehmoment der Zielkomponente kleiner als der Zieldrehmomentgrenzwert ist, Steuern des Verbrennungsmotors (1) zur Einspritzung von Kraftstoff.

8. Startverfahren nach Anspruch 1, wobei der Schritt des Bestimmens, ob die Zielkomponente der erste Motor (2) oder die Kupplung (3) ist, gemäß dem aktuellen Zustand des ersten Motors (2) und der aktuellen Fahrzeuggeschwindigkeit des Fahrzeugs umfasst:
als Reaktion darauf, dass der aktuelle Zustand des ersten Motors (2) normal ist, Bestimmen, dass die Zielkomponente der erste Motor (2) ist; und
als Reaktion darauf, dass der aktuelle Zustand des ersten Motors (2) fehlerhaft ist und die aktuelle Fahrzeuggeschwindigkeit des Fahrzeugs größer als ein voreingestellter Fahrzeuggeschwindigkeitsschwellenwert ist, Bestimmung, dass die Zielkomponente die Kupplung (3) ist.

9. Startverfahren nach Anspruch 1, wobei
der Schritt des Bestimmens einer verfügbaren Startstrategie gemäß dem aktuellen Zustand des ersten Motors (2) und den aktuellen Zustandsdaten des Fahrzeugs und des Ausführens der verfügbaren Startstrategie zum Starten des Verbrennungsmotors weiterhin umfasst:
als Reaktion darauf, dass der aktuelle Zustand des ersten Motors (2) fehlerhaft ist, Bestimmen, ob die aktuelle Fahrzeuggeschwindigkeit des Fahrzeugs kleiner oder gleich einem voreingestellten Fahrzeuggeschwindigkeitsschwellenwert ist und ob andere aktuelle Zustandsdaten des Fahrzeugs eine Kupplungsstart-Wartebedingung erfüllen (S804);
als Reaktion darauf, dass die aktuelle Fahrzeuggeschwindigkeit des Fahrzeugs kleiner oder gleich dem voreingestellten Fahrzeuggeschwindigkeitsschwellenwert ist und die anderen aktuellen Zustandsdaten des Fahrzeugs die Kupplungsstart-Wartebedingung erfüllen, Bestimmen, dass die Kupplungsstart-Wartestrategie die verfügbare Startstrategie ist (S806); und
Ausführen der Kupplungsstart-Wartestrategie, umfassend: Überwachen der Fahrzeuggeschwindigkeit des Fahrzeugs in Echtzeit, bis die Fahrzeuggeschwindigkeit des Fahrzeugs größer als dem voreingestellten Fahrzeuggeschwindigkeitsschwellenwert ist, und Steuern der Kupplung (3), um den Verbrennungsmotor (1) zum Starten zu ziehen (S808).

10. Startverfahren nach Anspruch 9, wobei
die Kupplungsstart-Wartebedingung eine Bedingung umfasst, dass das Fahrzeug beschleunigt wird, und eine Bedingung, dass das Fahrzeug nicht den ständigen Betrieb des Verbrennungsmotors (1) benötigt, wobei
die aktuellen Zustandsdaten des Fahrzeugs außerdem eine Beschleunigung oder einen Beschleugigeröffnungsgrad und einen Fahrmodus des Fahrzeugs umfassen;
die Bedingung, dass das Fahrzeug beschleunigt wird, umfasst:
die Beschleunigung ein positiver Wert und größer als ein voreingestellte Beschleunigungsschwellenwert ist, oder
Beschleugigeröffnungsgrad größer als ein zweiter Schwellenwert für den Beschleugigeröffnungsgrad ist; und
die Bedingung, dass das Fahrzeug nicht den ständigen Betrieb des Verbrennungsmotors (1) benötigt, umfasst:
der Fahrmodus des Fahrzeugs kein Sportmodus ist.

11. Startverfahren nach Anspruch 10, wobei
die aktuellen Zustandsdaten des Fahrzeugs außerdem ein Fahrerwunschdrehmoment umfasst; und
die Kupplungsstart-Wartebedingung umfasst weiterhin:
Fahrerwunschdrehmoment kleiner als ein erster Radenddrehmoment-Schwellenwert ist.

12. Startverfahren nach einem der Ansprüche 1 bis 11, wobei das Zweimotoren-Hybridantriebssystem außerdem einen zweiten Motor (7) umfasst, der mit dem Gangschaltsystem (5) verbunden ist und zum Antrieb der Räder (6) verwendet wird; und
als Reaktion darauf, dass der Verbrennungsmotor (1) beim Startvorgang des Verbrennungsmotors (1) durch die Kupplung (3) gezogen wird, umfasst das Startverfahren weiterhin:
in dem Prozess, bei dem die Kupplung (3) den Verbrennungsmotor (1) zum Starten zieht, Ausführen einer aktiven Dämpfungssteuerung am zweiten Motor (7), wobei
der Schritt des Ausführen einer aktiven Dämpfungssteuerung am zweiten Motor (7) umfasst:
Erfassen einer angeforderten Drehzahl eines Fahrers und einer tatsächlichen Drehzahl des zweiten Motors (7);
Berechnen eines Differenzwerts zwischen der angeforderten Drehzahl und der tatsächlichen Drehzahl; und
Durchführen einer Proportional-Integral-Steuerung des zweiten Motors (7) entsprechend dem Differenzwert, um ein Ausgangsdrehmoment des zweiten Motors (7) zu kompensieren.

13. Startvorrichtung (100) für einen Verbrennungsmotor (1) in einem Zweimotoren-Hybridantriebssystem, **dadurch gekennzeichnet, dass** sie einen Speicher (110) und einen Prozessor (120) umfasst, wobei ein Steuerprogramm in dem Speicher (110) gespeichert ist; und das Steuerprogramm verwendet wird, um das Startverfahren gemäß einem der Ansprüche 1-12 zu implementieren, wenn es von dem Prozessor (120) ausgeführt wird.

14. Hybrid-Elektrofahrzeug, **dadurch gekennzeichnet, dass** es ein Zweimotoren-Hybridantriebssystem und die Startvorrichtung (100) für den Verbrennungsmotor (1) in dem Zweimotoren-Hybridantriebssystem nach Anspruch 13 umfasst.

## Revendications

1. Procédé de démarrage pour un moteur (1) dans un système de puissance hybride à double moteur électrique, le système de puissance hybride à double moteur électrique comprenant le moteur (1), un premier moteur électrique (2) connecté au moteur (1) et un embrayage (3) connecté entre le premier moteur électrique (2) et un système de passage de vitesses (5) ; le procédé de démarrage comprenant : une fois une demande de démarrage du moteur reçue, acquérir un état actuel du premier moteur électrique (2) et des données d'état actuel d'un véhicule (S302) ;
**caractérisé en ce que** le procédé de démarrage comprend en outre : déterminer une stratégie de démarrage disponible en fonction de l'état actuel du premier moteur électrique (2) et des données d'état actuel du véhicule, et exécuter la stratégie de démarrage disponible pour démarrer le moteur, dans lequel la stratégie de démarrage disponible comprend au moins l'un des éléments suivants : une stratégie de couple de pré-traînage, et une stratégie d'attente de démarrage de l'embrayage dans laquelle il attend que la vitesse du véhicule soit augmentée jusqu'à supérieure à un seuil de vitesse prédéfini et que l'embrayage soit commandé à entraîner le moteur à démarrer une fois la vitesse du véhicule augmentée jusqu'à supérieure à la vitesse prédéfinie du véhicule (S304) ;
dans lequel les données d'état actuel du véhicule comprennent au moins une vitesse actuelle du véhicule ; et
l'étape de déterminer une stratégie de démarrage disponible en fonction de l'état actuel du premier moteur électrique (2) et des données d'état actuel du véhicule, et exécuter la stratégie de démarrage disponible pour démarrer le moteur comprend :
déterminer si un composant cible qui va entraîner le moteur (1) à démarrer est le premier moteur électrique (2) ou l'embrayage (3) en fonction de l'état actuel du premier moteur électrique (2) et de la vitesse actuelle du véhicule (S404) ;
en réponse au fait que le composant cible qui va entraîner le moteur (1) à démarrer est le premier moteur électrique (2) ou l'embrayage (3), déterminer si une condition d'application du couple de pré-traînage est remplie en fonction des données d'état actuel du véhicule (S406) ;
en réponse au fait que la condition d'application du couple de pré-traînage est remplie, déterminer que la stratégie de couple de pré-traînage est la stratégie de démarrage disponible (S408) ; et
exécuter la stratégie de couple de pré-traînage, comprenant : générer un signal de démarrage de traînage et envoyer le signal au composant cible, et commander le composant cible à exporter un couple de pré-traînage correspondant dans un délai défini à partir de la réception du signal de démarrage de traînage (S410) ; et
une fois que le composant cible a terminé l'export du couple de pré-traînage, augmenter le couple de traînage exporté par le composant cible à un couple de traînage maximum nécessaire pour entraîner le moteur à une vitesse de rotation cible, de manière à entraîner le moteur à atteindre la vitesse de rotation cible, le couple de pré-traînage étant inférieur au couple de traînage maximum.

2. Procédé de démarrage selon la revendication 1, dans lequel,
les données d'état actuel du véhicule comprennent en outre une vitesse de rotation du moteur (1) et un état d'accélérateur ou un couple demandé par le conducteur ; et
la condition d'application du couple de pré-traînage comprend que la vitesse de rotation du moteur (1) est inférieure ou égale à un seuil de vitesse de rotation prédéfini et qu'un mode de démarrage prévu par le conducteur est un mode de démarrage stable, dans lequel,
l'état d'accélérateur comprend un degré d'ouverture de l'accélérateur et un taux de passage de l'accélérateur ; et
l'étape de déterminer si la condition d'application du couple de pré-traînage est remplie en fonction des données d'état actuel du véhicule comprend :
déterminer si la vitesse de rotation acquise du moteur (1) est inférieure ou égale au seuil de vitesse de rotation prédéfini ; et
déterminer si le mode de démarrage prévu par le conducteur est le mode de démarrage stable en fonction du degré d'ouverture de l'accélérateur acquis et du taux de passage de l'accélérateur ou en fonction du couple demandé par le conducteur acquis.

3. Procédé de démarrage selon la revendication 2, dans lequel,
l'étape de déterminer si le mode de démarrage prévu par le conducteur est le mode de démarrage stable en fonction du degré d'ouverture de l'accélérateur acquis et du taux de passage de l'accélérateur ou en fonction du couple demandé par le conducteur acquis comprend :
déterminer si le degré d'ouverture de l'accélérateur est supérieur à un premier seuil de degré d'ouverture de l'accélérateur et si le taux de passage de l'accélérateur est supérieur à un seuil de taux de passage prédéfini ; sinon, déterminer que le mode de démarrage prévu par le conducteur est le mode de démarrage stable ; ou
déterminer si le couple demandé par le conducteur est inférieur ou égal à un premier seuil de couple en bout de roue ; si oui, déterminer que le mode de démarrage prévu par le conducteur est le mode de démarrage stable.

4. Procédé de démarrage selon la revendication 1, dans lequel les données d'état actuel du véhicule comprennent en outre une température du liquide de refroidissement du moteur (1) ; et l'étape de déterminer une stratégie de démarrage disponible en fonction de l'état actuel du premier moteur électrique (2) et des données d'état actuel du véhicule, et exécuter la stratégie de démarrage disponible pour démarrer le moteur comprend en outre :
lorsqu'il est déterminé que le composant cible est le premier moteur électrique ou l'embrayage, déterminer qu'une stratégie de contrôle de l'injection de carburant est la stratégie de démarrage disponible (S706) ; et
exécuter la stratégie de contrôle de l'injection de carburant, comprenant : déterminer un mode de démarrage prévu par le conducteur en fonction des données d'état actuel du véhicule (S708) ;
déterminer un moment d'injection de carburant du moteur (1) correspondant au composant cible en fonction de la température du liquide de refroidissement du moteur (1) et du mode de démarrage prévu par le conducteur (S708) ; et
commander le moteur (1) à injecter du carburant au moment d'injection de carburant déterminé dans le processus où le composant cible entraîne le moteur (1) à démarrer (S712).

5. Procédé de démarrage selon la revendication 4, dans lequel,
les données d'état actuel du véhicule comprennent en outre un état d'accélérateur ou un couple demandé par le conducteur ; et
le mode de démarrage prévu par le conducteur comprend un mode de démarrage rapide et un mode de démarrage stable, dans lequel
l'état d'accélérateur comprend un degré d'ouverture de l'accélérateur et un taux de passage de l'accélérateur ; et
l'étape de déterminer le mode de démarrage prévu par le conducteur en fonction des données d'état actuel du véhicule comprend :
déterminer si le degré d'ouverture de l'accélérateur est supérieur à un premier seuil de degré d'ouverture de l'accélérateur et si le taux de passage de l'accélérateur est supérieur à un seuil de taux de passage prédéfini ;
en réponse au fait que le degré d'ouverture de l'accélérateur est supérieur au premier seuil de degré d'ouverture de l'accélérateur et le taux de passage de l'accélérateur est supérieur au seuil de taux de passage prédéfini, déterminer que le mode de démarrage prévu par le conducteur est le mode de démarrage rapide ;
en réponse au fait que le degré d'ouverture de l'accélérateur n'est pas supérieur au premier seuil de degré d'ouverture de l'accélérateur et le taux de passage de l'accélérateur n'est pas supérieur au seuil de taux de passage prédéfini, déterminer que le mode de démarrage prévu par le conducteur est le mode de démarrage stable ; ou
déterminer si le couple demandé par le conducteur est supérieur à un premier seuil de couple en bout de roue ;
en réponse au fait que le couple demandé par le conducteur est supérieur au premier seuil de couple en bout de roue, déterminer que le mode de démarrage prévu par le conducteur est le mode de démarrage rapide ;
en réponse au fait que le couple demandé par le conducteur n'est pas supérieur au premier seuil de couple en bout de roue, déterminer que le mode de démarrage prévu par le conducteur est le mode de démarrage stable.

6. Procédé de démarrage selon la revendication 5, dans lequel,
l'étape de déterminer le moment d'injection de carburant du moteur (1) correspondant au composant cible en fonction de la température du liquide de refroidissement du moteur (1) et du mode de démarrage prévu par le conducteur comprend :
lorsque le mode de démarrage prévu par le conducteur est le mode de démarrage rapide, déterminer que le moment d'injection de carburant du moteur (1) est le moment où la vitesse de rotation du moteur (1) est supérieure à 0 ;
lorsque le mode de démarrage prévu par le conducteur est le mode de démarrage stable et que la température du liquide de refroidissement du moteur (1) est supérieure à une température de démarrage de moteur à chaud prédéfini, déterminer que le moment d'injection de carburant du moteur (1) est le moment où un couple de traînage du composant cible est complètement déchargé ; et
lorsque le mode de démarrage prévu par le conducteur est le mode de démarrage stable et que la température du liquide de refroidissement du moteur (1) est inférieure ou égale à la température de démarrage de moteur à chaud prédéfini, rechercher une table de correspondance entre une température du liquide de refroidissement du moteur et une valeur limite de couple du composant cible pour obtenir une valeur limite de couple cible du composant cible correspondant à la température du liquide de refroidissement du moteur (1), et déterminer que le moment d'injection de carburant du moteur (1) est le moment où le couple de traînage du composant cible est inférieur à la valeur limite de couple cible.

7. Procédé de démarrage selon la revendication 6, dans lequel,
l'étape de commander le moteur (1) à injecter du carburant au moment d'injection de carburant déterminé dans le processus où le composant cible entraîne le moteur (1) à démarrer comprend :
lorsque le mode de démarrage prévu par le conducteur est le mode de démarrage rapide, acquérir une vitesse de rotation actuelle du moteur (1) en temps réel dans le processus où le composant cible entraîne le moteur (1) à démarrer ;
lorsque la vitesse de rotation actuelle du moteur (1) est supérieure à 0, commander le moteur (1) à injecter du carburant ;
lorsque le mode de démarrage prévu par le conducteur est le mode de démarrage stable, acquérir le couple de traînage du composant cible en temps réel dans le processus où le composant cible entraîne le moteur (1) à démarrer ;
dans le cas où la température du liquide de refroidissement du moteur est supérieure à la température de démarrage de moteur à chaud prédéfini, lorsque le couple de traînage du composant cible est complètement déchargé, commander le moteur (1) à injecter du carburant ; et
dans le cas où la température du liquide de refroidissement du moteur (1) est inférieure ou égale à la température de démarrage de moteur à chaud prédéfini, lorsque le couple de traînage du composant cible est inférieure à la valeur limite de couple du composant cible, commander le moteur (1) à injecter du carburant.

8. Procédé de démarrage selon la revendication 1, dans lequel,
l'étape de déterminer si le composant cible est le premier moteur électrique (2) ou l'embrayage (3) en fonction de l'état actuel du premier moteur électrique (2) et de la vitesse actuelle du véhicule comprend :
en réponse au fait que l'état actuel du premier moteur électrique (2) est normal, déterminer que le composant cible est le premier moteur électrique (2) ; et
en réponse au fait que l'état actuel du premier moteur électrique (2) est défectueux et la vitesse actuelle du véhicule est supérieure à un seuil de vitesse prédéfini du véhicule, déterminer que le composant cible est l'embrayage (3).

9. Procédé de démarrage selon la revendication 1, dans lequel,
l'étape de déterminer une stratégie de démarrage disponible en fonction de l'état actuel du premier moteur électrique (2) et des données d'état actuel du véhicule, et exécuter la stratégie de démarrage disponible pour démarrer le moteur comprend en outre :
en réponse au fait que l'état actuel du premier moteur électrique (2) est défectueux, déterminer si la vitesse actuelle du véhicule est inférieure ou égale à un seuil de vitesse prédéfini du véhicule et si les autres données d'état actuel du véhicule répondent à une condition d'attente de démarrage de l'embrayage (S804) ;
en réponse au fait que la vitesse actuelle du véhicule est inférieure ou égale au seuil de vitesse prédéfini du véhicule et que les autres données d'état actuel du véhicule répondent à la condition d'attente de démarrage de l'embrayage, déterminer que la stratégie d'attente de démarrage de l'embrayage est la stratégie de démarrage disponible (S806) ; et
exécuter la stratégie d'attente de démarrage de l'embrayage, comprenant : surveiller la vitesse du véhicule en temps réel jusqu'à ce que la vitesse du véhicule soit supérieure au seuil de vitesse prédéfini du véhicule, et commander l'embrayage (3) à entraîner le moteur (1) à démarrer (S808).

10. Procédé de démarrage selon la revendication 9, dans lequel,
la condition d'attente de démarrage de l'embrayage comprend une condition que le véhicule est accéléré et une condition que le véhicule n'a pas besoin que le moteur (1) fonctionne toujours, dans laquelle,
les données d'état actuel du véhicule comprennent en outre une accélération ou un degré d'ouverture de l'accélérateur et un mode de conduite du véhicule ;
la condition d'accélération du véhicule comprend :
l'accélération est une valeur positive et est supérieure à un seuil d'accélération prédéfini, ou le degré d'ouverture de l'accélérateur est supérieur à un deuxième seuil de degré d'ouverture de l'accélérateur ; et
la condition que le véhicule n'a pas besoin que le moteur (1) fonctionne toujours comprend :
le mode de conduite du véhicule n'est pas un mode sport.

11. Procédé de démarrage selon la revendication 10, dans lequel,
les données d'état actuel du véhicule comprennent en outre un couple demandé par le conducteur ; et
la condition d'attente de démarrage de l'embrayage comprend en outre :
le couple demandé par le conducteur est inférieur à un deuxième seuil de couple en bout de roue.

12. Procédé de démarrage selon l'une quelconque des revendications 1 à 11, dans lequel le système de puissance hybride à double moteur électrique comprend en outre un deuxième moteur électrique (7) connecté au système de passage de vitesses (5) et utilisé pour entraîner des roues (6) ; et
en réponse au fait que le moteur (1) est entraîné par l'embrayage (3) dans le processus de démarrage du moteur (1), le procédé de démarrage comprend en outre :
dans le processus où l'embrayage (3) entraîne le moteur (1) à démarrer, effectuer une commande d'amortissement actif sur le deuxième moteur électrique (7), dans lequel,
l'étape d'effectuer une commande d'amortissement actif sur le deuxième moteur électrique (7) comprend :
acquérir une vitesse de rotation demandée par le conducteur et une vitesse de rotation réelle du deuxième moteur électrique (7) ;
calculer une valeur de différence entre la vitesse de rotation demandée et la vitesse de rotation réelle ; et
effectuer une commande proportionnelle-intégrale sur le deuxième moteur électrique (7) en fonction de la valeur de différence, de manière à compenser un couple de sortie du deuxième moteur électrique (7).

13. Dispositif de démarrage (100) pour un moteur (1) dans un système de puissance hybride à double moteur électrique, **caractérisé en ce qu'**il comprend une mémoire (110) et un processeur (120), dans lequel un programme de commande est stocké dans la mémoire (110) ; et le programme de commande est utilisé pour mettre en oeuvre, lorsqu'il est exécuté par le processeur (120), le procédé de démarrage selon l'une quelconque des revendications 1 à 12.

14. Véhicule électrique hybride, **caractérisé en ce qu'**il comprend un système de puissance hybride à double moteur électrique, et le dispositif de démarrage (100) pour le moteur (1) dans le système de puissance hybride à double moteur électrique selon la revendication 13.
